(19) **Europäisches Patentamt / European Patent Office / Office européen des brevets**

(11) **EP 4 678 346 A1**

(12) **EUROPEAN PATENT APPLICATION**
published in accordance with Art. 153(4) EPC

(43) Date of publication:
**14.01.2026 Bulletin 2026/03**

(21) Application number: **23937267.5**

(22) Date of filing: **14.11.2023**

(51) International Patent Classification (IPC):
**B25J 9/16** (2006.01)

(52) Cooperative Patent Classification (CPC):
**G05D 1/241; B25J 9/16; B62D 57/022; B62D 57/032**

(86) International application number:
**PCT/CN2023/131610**

(87) International publication number:
**WO 2024/234594 (21.11.2024 Gazette 2024/47)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **17.05.2023 CN 202310558206**

(71) Applicant: **Tencent Technology (Shenzhen) Company Limited**
**Shenzhen, Guangdong 518057 (CN)**

(72) Inventors:
• **ZHOU, Qinqin**
**Shenzhen, Guangdong 518057 (CN)**
• **WANG, Haitao**
**Shenzhen, Guangdong 518057 (CN)**
• **WANG, Shuai**
**Shenzhen, Guangdong 518057 (CN)**
• **CHI, Wanchao**
**Shenzhen, Guangdong 518057 (CN)**
• **ZHENG, Yu**
**Shenzhen, Guangdong 518057 (CN)**
• **LI, Xiong**
**Shenzhen, Guangdong 518057 (CN)**

(74) Representative: **EP&C**
**P.O. Box 3241**
**2280 GE Rijswijk (NL)**

(54) **ROBOT CONTROL METHOD AND APPARATUS, DEVICE AND STORAGE MEDIUM**

(57) A robot control method and apparatus, a device, and a storage medium, relating to the technical field of artificial intelligence. The method comprises: for a robot having a first mechanical leg group and a second mechanical leg group, acquiring an expected operation space task of the robot on a supporting surface, the expected operation space task being used to guide the robot to alternately swing the first mechanical leg group and the second mechanical leg group so as to move on the supporting surface (601); according to the expected operation space task and a whole-body dynamics model of the robot, acquiring an expected joint torque set corresponding to the expected operation space task, the expected joint torque set comprising expected joint torque used to control each part of the robot (602); and controlling the robot to move under the guidance of the expected operation space task according to the expected joint torque set (603). The control accuracy of the robot is improved by means of the whole-body dynamics model, and the movement efficiency of the robot is improved by means of the expected operation space task.

Obtain a pre-defined operation task of the robot on a support plane in an operation space, the pre-defined operation task indicating a pre-set acceleration for each of at least one part of the robot , wherein the pre-defined operation task is configured to guide the robot to move on the support plane by alternately swinging the first robotic leg group and the second robotic leg group — 601

Obtain a joint torque set corresponding to the pre-defined operation task based on the pre-defined operation task and a dynamic model of the robot, the joint torque set comprising at least one joint torque configured for controlling at least one part of the robot — 602

Control, based on the joint torque set, the robot to move under guidance of the pre-defined operation task — 603

**FIG. 6**

**Description**

RELATED APPLICATION

This application claims priority to Chinese Patent Application No. 202310558206.5, filed on May 17, 2023 and entitled "ROBOT CONTROL METHOD AND APPARATUS, DEVICE AND STORAGE MEDIUM".

FIELD OF THE TECHNOLOGY

Embodiments of this application relate to the field of artificial intelligence (AI) technologies, and in particular, to a control method and apparatus for a robot, a device, and a storage medium.

BACKGROUND OF THE DISCLOSURE

As robot control technologies, some organizations and science and research mechanisms successively launch wheeled-legged robots having a wheel as a foot. With the wheel foot, the wheeled-legged robots not only can slide quickly, but also can climb a staircase and cross an obstacle.
Taking a wheeled-legged robot climbing a staircase as an example, in the related art, the wheeled-legged robot is controlled through a heuristic method. For example, a projection of a center of gravity of the wheeled-legged robot is controlled to move slowly in a stance area of the wheeled-legged robot through planning of a position of a robotic leg of the wheeled-legged robot on the staircase, to achieve staircase ascending. The method aims at static staircase ascending, to be specific, the projection of the center of gravity of the robot does not exceed the stance area of the robot. Therefore, staircase ascending efficiency of the robot is not high.

SUMMARY

Embodiments of this application provide a control method and apparatus for a robot, a device, and a storage medium, which can improve robot movement efficiency and improve robot control accuracy. The technical solutions are as follows:
According to an aspect of the embodiments of this application, a control method for a robot is provided. The method is executable by a computer device, parts of the robot comprising a body, and a first robotic leg group connected to the body through a first hip joint and a second robotic leg group connected to the body through a second hip joint, and the method comprising:

obtaining a pre-defined operation task of the robot on a support plane in an operation space, the pre-defined operation task indicating a pre-set acceleration for each of at least one part of the robot , wherein the pre-defined operation task is configured to guide the robot to move on the support plane by alternately swinging the first robotic leg group and the second robotic leg group;

obtaining a joint torque set corresponding to the pre-defined operation task based on the pre-defined operation task and a dynamic model of the robot, the joint torque set comprising at least one joint torque configured for controlling at least one part of the robot; and

controlling, based on the joint torque set, the robot to move under guidance of the pre-defined operation task.

According to an aspect of the embodiments of this application, a control apparatus for a robot is provided. The parts of the robot comprising a body, and a first robotic leg group connected to the body through a first hip joint and a second robotic leg group connected to the body through a second hip joint. The apparatus includes:

a desired task obtaining module, configured to obtain pre-defined operation task of the robot on a support plane in an operation space, the pre-defined operation task indicating a pre-set acceleration for each of at least one part of the robot , wherein the pre-defined operation task is configured to guide the robot to move on the support plane by alternately swinging the first robotic leg group and the second robotic leg group;

a desired moment obtaining module, configured to obtain a joint torque set corresponding to the pre-defined operation task based on the pre-defined operation task and a dynamic model of the robot, the joint torque set comprising at least one joint torque configured for controlling at least one part of the robot; and

a robot movement module, configured to control, based on the joint torque set, the robot to move under guidance of the pre-defined operation task.

According to an aspect of embodiments of this application, a computer device is provided, including a processor and a memory, the memory having a computer program stored therein, and the computer program being loaded and executed by the processor to perform the foregoing control method for a robot.

According to an aspect of the embodiments of this application, a computer-readable storage medium is provided, having a computer program stored therein, the computer program being loaded and executed by a processor to implement the foregoing control method for a robot.

According to an aspect of the embodiments of this application, a computer program product is provided, including a computer program, the computer program being stored in a computer-readable storage medium. A processor of a computer device reads the computer program from the computer-readable storage medium, and the processor executes the computer program to cause the computer device to perform the foregoing control method for a robot.

The technical solutions provided in the embodiments of this application may include the following beneficial effects:

For a robot having a first robotic leg group and a second robotic leg group, because centers of rotation of hip joints corresponding to the first robotic leg group and the second robotic leg group are located on a same vertical plane, one robotic leg group may be caused to stand, and the other robotic leg group may be caused to swing through planning of a pre-defined operation task, so that the robot quickly moves in a dynamic balanced state (to be specific, a center of gravity of the robot may exceed a stance area of the robot), thereby improving robot movement efficiency. In addition, controlling the first robotic leg group and the second robotic leg group to swing alternately to control the robot to move can further improve the robot movement efficiency.

In addition, an accurate joint torque set corresponding to the pre-defined operation task can be obtained through the dynamic model of the robot based on the pre-defined operation task, so that the pre-defined operation task can be accurately implemented based on the joint torque set, thereby improving robot control accuracy.

BRIEF DESCRIPTION OF THE DRAWINGS

FIG. 1 is a schematic diagram of an implementation environment of a solution according to an embodiment of this application.

FIG. 2 is a schematic diagram of a quadruped wheeled-legged robot according to an embodiment of this application.

FIG. 3 is a schematic diagram of a wheeled-legged robot climbing a staircase according to an embodiment of this application.

FIG. 4 is a schematic diagram of a wheeled-legged robot crossing a road shoulder according to an embodiment of this application.

FIG. 5 is a schematic diagram of a wheeled-legged robot crossing a pit according to an embodiment of this application.

FIG. 6 is a schematic diagram of a control method for a robot according to an embodiment of this application.

FIG. 7 is a flowchart of a method for obtaining a pre-defined operation task according to an embodiment of this application.

FIG. 8 is a schematic diagram of an inverted pendulum model of a wheeled-legged robot according to an embodiment of this application.

FIG. 9 is a flowchart of a method for obtaining a joint torque set according to an embodiment of this application.

FIG. 10 to FIG. 12 are schematic diagrams illustrating that a quadruped wheeled-legged robot climbs a staircase.

FIG. 13 is a block diagram of a control apparatus for a robot according to an embodiment of this application.

FIG. 14 is a block diagram of another control apparatus for a robot according to an embodiment of this application.

FIG. 15 is a simplified structural block diagram of a computer device according to an embodiment of this application.

DESCRIPTION OF EMBODIMENTS

To make objectives, technical solutions, and advantages of this application clearer, implementations of this application are further described in detail below with reference to drawings.

Artificial intelligence (AI) is a theory, a method, a technology, and an application system that use a digital computer or a machine controlled by the digital computer to simulate, extend, and expand human intelligence, so as to sense an environment, obtain knowledge, and obtain an optimal result with knowledge. In other words, AI is a comprehensive technology in computer science and attempts to understand the essence of intelligence and produce a new intelligent machine that can react in a manner similar to human intelligence. AI is to study the design principles and implementation methods of various intelligent machines, to enable the machines to have the functions of perception, reasoning, and decision-making.

The AI technology is a comprehensive discipline, and involves a wide range of fields including both hardware-level technologies and software-level technologies. Basic AI technologies generally include technologies such as a sensor, a dedicated AI chip, cloud computing, distributed storage, a big data processing technology, an operating/interaction system, and electromechanical integration. AI software technologies mainly include major directions such as a computer vision (CV) technology, a speech processing technology, a natural language processing technology, and machine learning/deep learning.

Technical solutions of this application mainly relate to a robot technology in the artificial intelligence technology, and mainly relate to intelligent robot control. A robot is a mechanical electronic device that is formed through combination of mechanical transmission and modern microelectronic technologies and can imitate a skill of a human, which is developed based on electronic, mechanical, and information technologies. A robot does not necessarily look like a person, and is a member of a large robot family provided that the robot can autonomously complete tasks and commands assigned to the robot by a human. A robot is an automated machine which has some intelligent capabilities, such as a perception capability, a planning capability, an action capability, and a collaborative capability, similar to those of a person or a living creature, and is an automated machine with high flexibility. As computer technologies and artificial intelligence technologies develop, robots are significantly improved in function and technologies. Technologies such as mobile robots and robot vision and touch are typical representatives.

In the technical solutions provided in the embodiments of this application, each operation may be performed by a computer device. The computer device is an electronic device having data computing, processing, and storage capabilities.

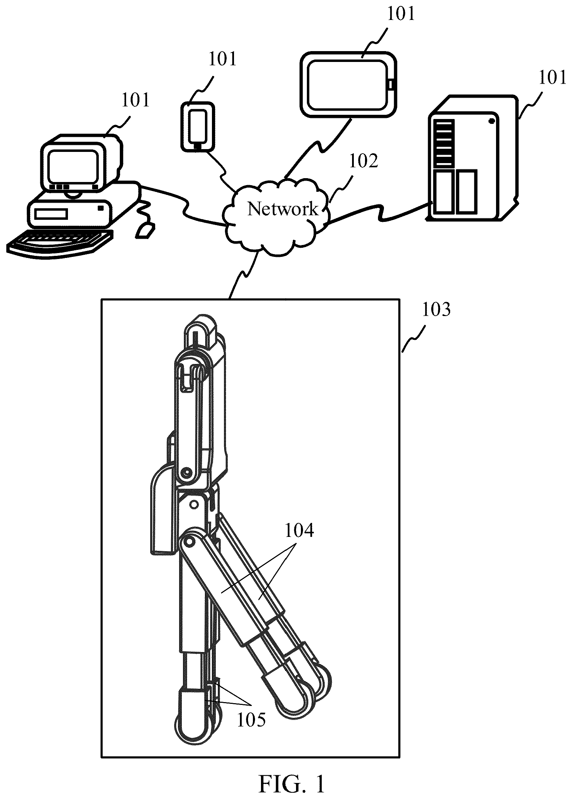

In the embodiments of the present disclosure including the embodiments of both the claims and the specification (hereinafter referred to as "all embodiments of the present disclosure"), the computer device may be a personal computer (PC) device configured to control robots, such as a desktop computer or a laptop computer, or may be a server configured to control a robot. The server may be an independent physical server, or may be a server cluster or a distributed system composed of a plurality of physical servers, or may be a cloud server providing a cloud computing service. The computer device and the robot may be connected by using a physical line, a network, or the like. For example, referring to FIG. 1, a computer device 101 may calculate a desired joint torque set corresponding to the robot 103 based on a pre-defined operation task of the robot 103 (the pre-defined operation task includes a desired acceleration of each part of the robot 103 in an operation space of the robot 103), and control the robot 103 to move based on the joint torque set through a network 102. For example, the computer device 101 may control, based on the joint torque set corresponding to the pre-defined operation task of the robot 103, a first robotic leg group 104 and a second robotic leg group 105 of the robot 103 to swing alternately, so that the robot 103 moves on a support plane.

In all embodiments of the present disclosure, the computer device may be a robot. In other words, steps in the technical solutions provided in all embodiments of the present disclosure are performed by a robot. For example, referring to FIG. 1, the computer device 101 may transmit the pre-defined operation task of the robot 103 to the robot 103 through the network 102, and the robot 103 calculates the corresponding joint torque set based on the pre-defined operation task, and then moves based on the joint torque set. In all embodiments of the present disclosure, the robot 103 may further automatically plan a pre-defined operation task based on a real environment, to execute different tasks in the real environment. This is not limited in all embodiments of the present disclosure.

The robot in all embodiments of the present disclosure may be a wheeled-legged robot, a legged robot, or the like. The wheeled-legged robot is a robot having a wheel as a foot portion, and the legged robot is a robot having a foot as a foot portion. This is not limited in all embodiments of the present disclosure.

In all embodiments of the present disclosure, the robot may include a body, and a first robotic leg group and a second robotic leg group connected to the body through hip joints. At least one of the first robotic leg group and the second robotic leg group includes at least two robotic legs. For example, the first robotic leg group includes at least two robotic legs, and the second robotic leg group may also include at least two robotic legs. At least two robotic legs of the first robotic leg group are respectively located on two sides of a central axis (that is, a sagittal plane) of the robot. At least two robotic legs of the second robotic leg group are respectively located on the two sides of the central axis of the robot. The first robotic leg group and the second robotic leg group are distributed side by side. In other words, a rotation center of a hip joint corresponding to the first robotic leg group and a rotation center of a hip joint corresponding to the second robotic leg group are located on a same vertical plane.

The robot in all embodiments of the present disclosure is described by using the wheeled-legged robot as an example.

The wheeled-legged robot in all embodiments of the present disclosure may include a body, and an outer robotic leg group (i.e., the first robotic leg group) and an inner robotic leg group (i.e., the second robotic leg group) connected to the body through hip joints. The outer robotic leg group may include two outer robotic legs, and the inner robotic leg group may include at least one inner robotic leg. Exemplarily, the wheeled-legged robot is a quadruped wheeled-legged robot. In other words, the wheeled-legged robot includes two outer robotic legs and two inner robotic legs. The wheeled-legged robot may alternatively be a tripedal wheeled-legged robot. In other words, the wheeled-legged robot includes two outer robotic legs and one inner robotic leg. A hip joint corresponding to at least one inner robotic leg in the inner robotic leg group is located between hip joints corresponding to two outer robotic legs in the outer robotic leg group, and centers of rotation of the hip joints corresponding to the outer robotic legs and centers of rotation of the hip joints corresponding to the inner robotic legs are located on a same vertical plane. The wheeled-legged robot can stand on the support plane through the outer robotic legs or the inner robotic legs, slide on the support plane through foot wheels on the outer robotic legs or the inner robotic legs, or move (i.e., walk) on the support plane by controlling the outer robotic leg group and the inner robotic leg group to swing alternately.

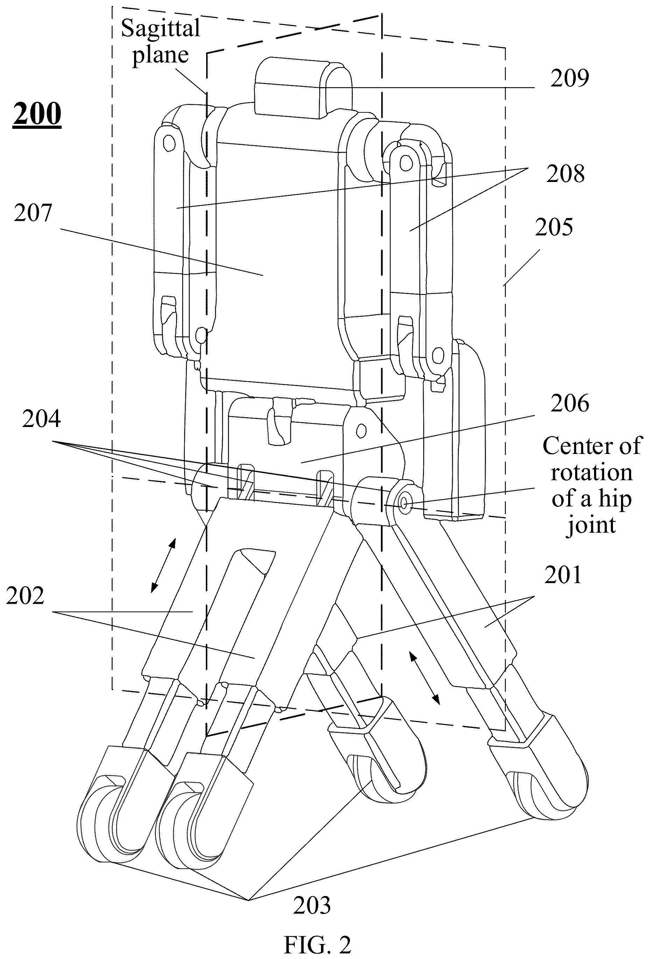

Exemplarily, FIG. 2 illustrates a schematic structural diagram of a quadruped wheeled-legged robot. A quadruped wheeled-legged robot 200 may include a body, a hip joint, and a robotic leg.

The quadruped wheeled-legged robot 200 has four robotic legs, i.e., two outer robotic legs 201 (i.e., a first robotic leg group) and two inner robotic legs 202 (i.e., a second robotic leg group). The two inner robotic legs 202 are located between the two outer robotic legs 201, and the four robotic legs each can stretch/contract in a direction shown in the figure alone. A foot wheel 203 is mounted to an end of each of the four robotic legs, and each foot wheel 203 may be independently driven. The quadruped wheeled-legged robot 200 may stand through two inner robotic legs 202 or two outer robotic legs 201, so as to be in a two-feet stance state. The quadruped wheeled-legged robot 200 may stand through the two inner robotic legs 202 and the two outer robotic legs 201, so as to be in a four-feet stance state. This is not limited in all embodiments of the present disclosure.

In all embodiments of the present disclosure, the two inner robotic legs 202 may be implemented as a whole. In other words, the quadruped wheeled-legged robot 200 may be implemented as a tripedal wheeled-legged robot, which has only one inner robotic leg.

Other ends of the four robotic legs are respectively connected to a hip joint 204, and the robotic legs may rotate about the respective hip joints 204 and remain in linkage. In all embodiments of the present disclosure, centers of rotation of the hip joints 204 corresponding to the quadruped wheeled-legged robot 200 are located on a same vertical plane 205, and planes of rotation of the robotic legs corresponding to the quadruped wheeled-legged robot 200 are parallel. The hip joints 204 corresponding to the two inner robotic legs 202 are located between the hip joints 204 corresponding to the two outer robotic legs 201.

In all embodiments of the present disclosure, the hip joints 204 corresponding to the quadruped wheeled-legged robot 200 may be coaxial, that is, the centers of rotation of the hip joints 204 are located on a same straight line. The hip joints 204 corresponding to the quadruped wheeled-legged robot 200 may alternatively be non-coaxial. For example, the hip joints 204 corresponding to the two inner robotic legs 202 are coaxial, and the hip joints 204 corresponding to the two outer robotic legs 201 are coaxial, but the hip joints 204 corresponding to the two inner robotic legs 202 and the hip joints 204 corresponding to the two outer robotic legs 201 are non-coaxial.

In all embodiments of the present disclosure, the hip joints 204 corresponding to the two outer robotic legs 201 share a driving motor, so that the two outer robotic legs 201 move synchronously. The hip joints 204 corresponding to the two inner robotic legs 202 share a driving motor, so that the two inner robotic legs 202 move synchronously. In a feasible example, each hip joint 204 corresponding to the quadruped wheeled-legged robot 200 may alternatively be independently driven by a corresponding driving motor. This is not limited in all embodiments of the present disclosure.

The body of the quadruped wheeled-legged robot 200 may include a waist 206, a torso 207, a head 208, and an upper leg 209.

The hip joints 204 corresponding to the quadruped wheeled-legged robot 200 are connected to one same end of the waist 206, and an other end of the waist 206 are connected to one end of the torso 207. The waist 206 has two centers of rotation, i.e., a pitching rotation center that enables the torso 207 to implement pitching and a sideway swinging rotation center that enables the torso 207 to implement sideway swinging. The sideway swinging rotation center is maintained in a series design with the pitching rotation center, is located above the pitching rotation center, and is connected to the torso 207.

Another end of the torso 207 is connected to the head 208 and the upper limb 209, and the upper limb 209 may be an upper limb with a plurality of degrees of freedom. In all embodiments of the present disclosure, an end actuator, such as a robotic claw or a sucker, is arranged on an upper part of the upper arm 209. A data collection device, such as an image capture device, a video recording device, or an inertial measurement unit (IMU) may be arranged in the head 208 to sense a real environment. The IMU may be arranged at a geometric center of the body 207, a hip joint center point (that is, a rotation center of the hip joint), or the like, and may be configured to measure an actual acceleration, an actual posture angular velocity, an actual Euler angle, or the like of the body 207.

In the technical solution provided in all embodiments of the present disclosure, the foot wheels, the robotic legs, the hip joints, the waist, and the torso (including the IMU) of the quadruped wheeled-legged robot 200 are necessary hardware for a control algorithm, and the other components are unnecessary hardware.

The quadruped wheeled-legged robot has a more stable structure and a stronger capability of withstanding external impact and disturbance compared with a biped wheeled-legged robot, and has fewer redundant joints and lower design complexity compared with a hexapod wheeled-legged robot. In addition, the quadruped wheeled-legged robot can bear a large load, pass through a narrow space, and execute tasks for objects at different heights, which has a strong capability of adapting to an environment.

The control method for a robot provided in all embodiments of the present disclosure is applicable to a plurality of scenarios, such as a robot climbing a staircase, a robot crossing a doorsill, a robot crossing a road shoulder, a robot crossing a pit, and any scenario of crossing an obstacle. A robot using the technical solution provided in all embodiments of the present disclosure has a stronger capability of adapting to an environment. The control method for a robot provided in all embodiments of the present disclosure can improve robot movement efficiency and robot control accuracy.

An application scenario of the technical solutions provided in all embodiments of the present disclosure is illustrated by using a wheeled-legged robot as an example.

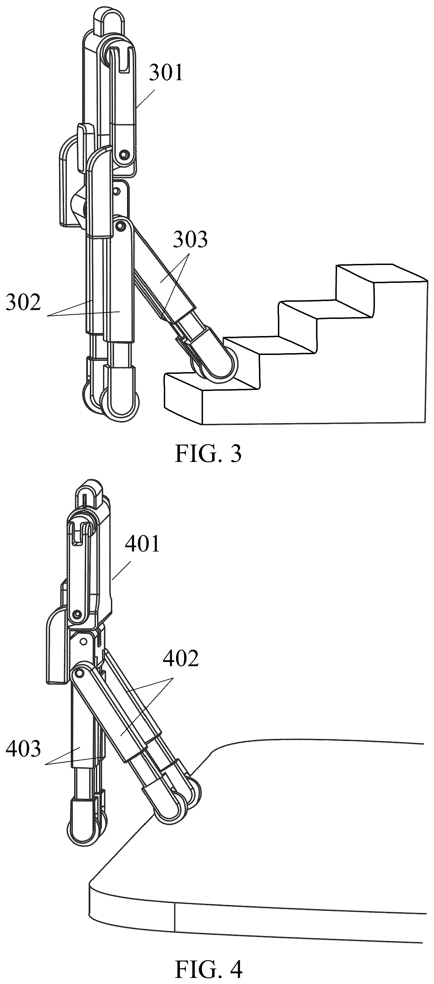

In all embodiments of the present disclosure, referring to FIG. 3, when a wheeled-legged robot 301 needs to climb a staircase, the wheeled-legged robot may first plan a pre-defined operation task based on the staircase, then calculate a joint torque set corresponding to the pre-defined operation task, and then control an outer robotic leg group 302 (i.e., a first robotic leg group) and an inner robotic leg group 303 (i.e., a second robotic leg group) to swing alternately based on the joint torque set, to complete staircase climbing. For example, first, the outer robotic leg group 302 is used as a stance robotic leg group and the inner robotic leg group 303 is used as a swinging robotic leg group to cause the robot 301 to climb up a first step. Then the inner robotic leg group 303 is used as a stance robotic leg group and the outer robotic leg group 302 is used as a swinging robotic leg group to cause the robot 301 to climb up a second step. The outer robotic leg group 302 and the inner robotic leg group 303 swing alternately in sequence, to complete the staircase climbing task.

In all embodiments of the present disclosure, referring to FIG. 4, when a wheeled-legged robot 401 needs to cross a road shoulder, the wheeled-legged robot may first plan a pre-defined operation task based on the road shoulder, then calculate a joint torque set corresponding to the pre-defined operation task, and then control an outer robotic leg group 402 and an inner robotic leg group 403 to swing alternately based on the joint torque set, to complete the road shoulder crossing. For example, first, the inner robotic leg group 403 is used as a stance robotic leg group and the outer robotic leg group 402 is used as a swinging robotic leg group to cause the outer robotic leg group 402 of the robot 401 to climb up the road shoulder. Then the outer robotic leg group 402 is used as a stance robotic leg group and the inner robotic leg group 403 is used as a swinging robotic leg group to cause the whole robot 401 to cross the road shoulder. The inner robotic leg group 403 and the outer robotic leg group 402 swing alternately in sequence, to complete the road shoulder crossing task.

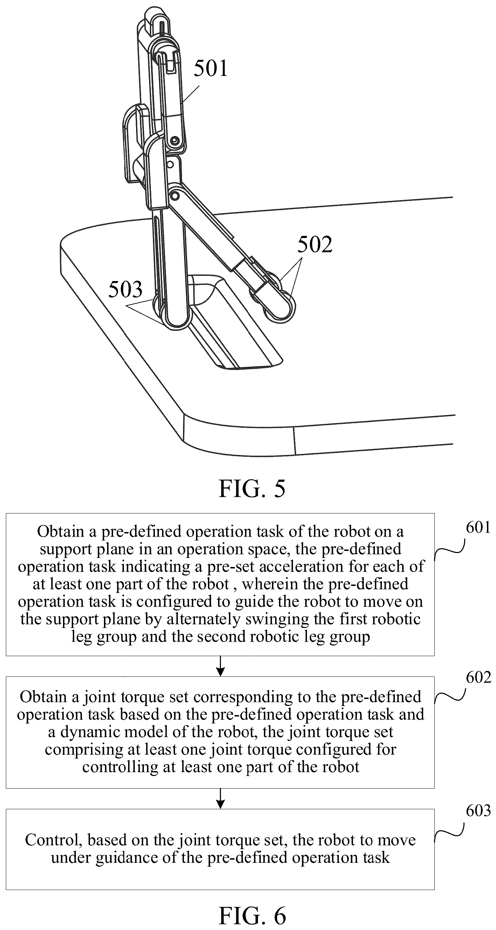

In all embodiments of the present disclosure, referring to FIG. 5, when a wheeled-legged robot 501 needs to cross a pit, the wheeled-legged robot may first plan a pre-defined operation task based on the pit, then calculate a joint torque set corresponding to the pre-defined operation task, and then control an outer robotic leg group 502 and an inner robotic leg group 503 to swing alternately based on the joint torque set, to complete the pit crossing. For example, first, the inner robotic leg group 503 is used as a stance robotic leg group and the outer robotic leg group 502 is used as a swinging robotic leg group to cause the outer robotic leg group 502 of the robot 501 to cross the pit. Then the outer robotic leg group 502 is used as a stance robotic leg group and the inner robotic leg group 503 is used as a swinging robotic leg group to cause the whole robot 501 to cross the pit. The inner robotic leg group 503 and the outer robotic leg group 502 swing alternately in sequence, to complete the pit crossing task.

The control method for a robot provided in all embodiments of the present disclosure are described below through method embodiments.

FIG. 6 is a flowchart of a control method for a robot according to an embodiment of this application. In all embodiments of the present disclosure, the control method for a robot is described by using an example in which each step is performed by a robot. A rotation center of a hip joint corresponding to the first robotic leg group and a rotation center of a hip joint corresponding to the second robotic leg group are located on a same vertical plane. The method may include at least one of the following operations (601-603).

Operation 601: Obtain a pre-defined operation task of the robot on a support plane in an operation space, the pre-defined operation task indicating a pre-set acceleration for each of at least one part of the robot , wherein the pre-defined operation task is configured to guide the robot to move on the support plane by alternately swinging the first robotic leg group and the second robotic leg group.

The pre-defined operation task is a task of the robot in an operation space, and may be planned based on the robot and a real environment in which the robot is located. For example, desired movement of the robot on a support plane may be planned to obtain a pre-defined operation task corresponding to the scenario.

The robot may control each part of the robot to move through the desired acceleration in the pre-defined operation task, to implement movement of the robot on the support plane. For example, the robot alternately swings the first robotic leg group and the second robotic leg group, to move on the support plane in a walking form. The robot in all embodiments of the present disclosure is the same as that in the foregoing embodiment, which is not described in detail herein.

The desired acceleration is an acceleration obtained in combination with a real environment for actually controlling the robot, and the following reference acceleration is a planned value, which is an acceleration configured for guiding the robot. The robot follows the desired acceleration, so that an action corresponding to the desired acceleration can be implemented. For example, a desired acceleration corresponding to a robotic leg is configured for guiding the robotic leg to swing. In this case, the robot controls the robotic leg to follow the desired acceleration, so that swing of the robotic leg can be implemented.

In all embodiments of the present disclosure, the pre-defined operation task includes a desired acceleration of each part of the robot at each control time, so that the whole robot moves based on a planned movement trajectory. The control time is a moment for controlling the robot through a control signal comprising a joint torque set corresponding to the pre-defined operation task. In other words, each control time is a moment for controlling the robot. The control times are arranged based on a specified time interval. The specified time interval may be set and adjusted based on an actual use requirement. For example, the control times are equally distributed.

In all embodiments of the present disclosure, the foregoing support plane may include only one plane, such as a flat ground or a road, or may include a plurality of planes at different heights, such as a staircase, a road surface with a road shoulder, and a ground with a pit. This is not limited in all embodiments of the present disclosure. The desired acceleration in the pre-defined operation task may be configured for guiding the robot to alternately swing the first robotic leg group and the second robotic leg group, to perform tasks such as walking, staircase climbing, road shoulder crossing, and pit crossing.

The foregoing operation space of the robot is a Cartesian space corresponding to the robot. In task-oriented whole body control of the robot, the Cartesian space corresponding to the robot may be referred to as the operation space of the robot. In all embodiments of the present disclosure, each position in the operation space of the robot may be represented based on a world coordinate system of the robot.

For example, a world coordinate system of the robot may be constructed through a contact point between a foot of the robot in an initial state and the support plane as an origin, a horizontal direction as an x-axis direction, a vertical direction as a z-axis direction, and a direction perpendicular to both the horizontal direction and the vertical direction as a y-axis direction. A position of the robot in the operation space may be represented based on three-dimensional coordinates of the robot in the world coordinate system. In all embodiments of the present disclosure, calculation processes in all embodiments of the present disclosure all occur in the world coordinate system of the robot.

In all embodiments of the present disclosure, the parts may include a first robotic leg group, a second robotic leg group, and a body of the robot, and the pre-defined operation task includes desired accelerations respectively corresponding to the first robotic leg group, the second robotic leg group, and the body.

In all embodiments of the present disclosure, during movement of the robot, a robotic leg group configured to swing is a swinging robotic leg group, and a robotic leg group configured for stance is a stance robotic leg group. Exemplarily, if the second robotic leg group is swung in a forward-moving direction of the robot by using the first robotic leg group as a support, the first robotic leg group is a stance robotic leg group, and the second robotic leg group is a swinging robotic leg group. If the first robotic leg group is swung in the forward-moving direction of the robot by using the second robotic leg group as a support, the second robotic leg group is a stance robotic leg group, and the first robotic leg group is a swinging robotic leg group.

A stance robotic leg group and a swinging robotic leg group corresponding to each step taken by the robot may be determined from the first robotic leg group and the second robotic leg group based on gait information of the robot. The gait information may be configured for indicating whether a robotic leg of the robot is a swinging robotic leg in each stepping period. The gait information may be planned in real time or preset. This is not limited in this application in real time. The stepping period is configured for indicating a duration for the first robotic leg group or the second robotic leg group to complete one swing.

For example, referring to FIG. 3, during staircase climbing of the robot 301, the first robotic leg group 302 and the second robotic leg group 303 are configured to swing alternately in sequence, and the second robotic leg group 303 and the first robotic leg group 302 are synchronously configured to perform stance alternately in sequence, so that the robot 301 completes the staircase climbing.

In all embodiments of the present disclosure, the desired acceleration included in the pre-defined operation task may be calculated through a feedback controller, such as a proportional derivative (PD) feedback controller and other feedback controllers, based on a reference movement trajectory of each part of the robot and an actual state of the robot.

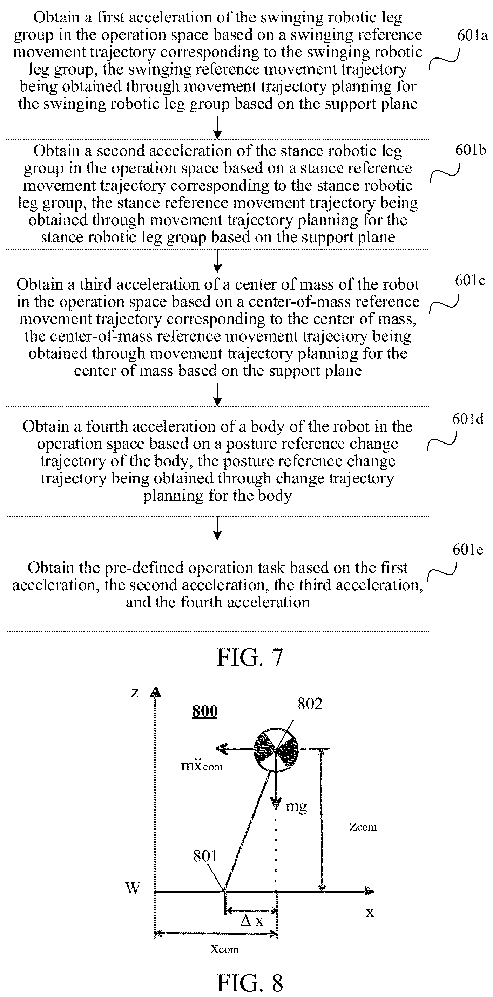

Referring to FIG. 7, the foregoing operation 601 may further include the following sub-operations:

Operation 601a: Obtain a first acceleration of the swinging robotic leg group in the operation space based on a swinging reference movement trajectory corresponding to the swinging robotic leg group, the swinging reference movement trajectory being obtained through movement trajectory planning for the swinging robotic leg group based on the support plane.

The swinging reference movement trajectory is a reference movement trajectory of the swinging robotic leg in the swinging robotic leg group, for example, a reference movement trajectory of a foot on the swinging robotic leg. The reference movement trajectory is configured for guiding movement of the robot. For example, the reference movement trajectory may include a reference position of the robot at each control time. The reference position is a position where the robot is desired to reach.

For example, an initial position and an end position of the swinging robotic leg in a stepping period may be planned based on size information of the support plane, then interpolation is performed on the initial position and the end position in the stepping period through a spline interpolation method, to obtain a swinging reference movement trajectory in the stepping period, and then the swinging reference movement trajectories in all stepping periods are spliced to obtain a final swinging reference movement trajectory.

Taking a quadruped wheeled-legged robot climbing a staircase as an example, a reference position (which is represented by three-dimensional coordinates in the world coordinate system) of a swinging robotic leg on each step of the staircase may be planned based on size information (such as a width, a height, and a length) of each step, and then interpolation may be performed between the reference positions, to obtain a swinging reference movement trajectory.

The foregoing first acceleration is a desired acceleration of a swinging robotic leg at each control time. For example, a desired acceleration of a foot of the swinging robotic leg at each control time may be determined as the first acceleration.

For example, when the robot stops moving after a plurality of control times, a process of obtaining the first acceleration may be as follows:

1. For each control time, a reference position, a reference velocity, and a reference acceleration of the swinging robotic leg group at the respective control time is obtained based on the swinging reference movement trajectory.

In all embodiments of the present disclosure, a reference position of the swinging robotic leg group at a control time may be directly determined based on the swinging reference movement trajectory, and a reference velocity and a reference acceleration of the swinging robotic leg group at the respective control time may be obtained based on a reference position of the swinging robotic leg group at the respective control time. For example, a first-order derivation and a second-order derivation are respectively performed on the reference position of the swinging robotic leg group at the respective control time, to obtain the reference velocity and the reference acceleration of the swinging robotic leg group at the respective control time. The reference velocity is a velocity desired to be reached, and the reference acceleration is an acceleration desired to be reached, which is not directly configured for controlling the robot.

2. The first acceleration at the respective control time is calculated through a PD feedback controller based on the reference position, the reference velocity, and the reference acceleration of the swinging robotic leg group at the respective control time, and an actual position and an actual velocity of the swinging robotic leg group at the respective control time. Wherein the PD feedback controller is controller in a control system whose output varies in proportion to the error signal as well as with the derivative of the error signal.

In all embodiments of the present disclosure, based on the IMU on the body, an acceleration, an angular velocity, and a posture (i.e., an actual Euler angle) of the body may be measured, and then an actual position, an actual velocity, an actual posture, and an actual angular velocity of the body in the world coordinate system may be obtained through a state estimation algorithm in combination with actual angles and actual accelerations of all joints of the robot, and contact information between the robot and the support plane. If a relative position, a relative velocity, and a relative angular velocity between a hip joint center point of a hip joint and the IMU are also known, a state of the hip joint center point may be calculated based on a state of the body (i.e., an actual position, an actual velocity, an actual attitude, and an actual angular velocity of the body in the world coordinate system).

In all embodiments of the present disclosure, if the hip joint center point is a position of an origin of a floating base coordinate system of the robot, a state of the floating base coordinate system may be obtained based on the state of the hip joint center point. Then, actual positions, actual velocities, actual postures, and actual angular velocities of all links corresponding to the robot in the world coordinate system may be calculated through the forward kinematics model of the whole-body model of the robot in combination with actual angles and actual angular velocities of all joints of the robot, the links including swinging robotic legs. In this way, actual positions and actual velocities of the swinging robotic legs in the operation space can be obtained. An actual position is a real position of a swinging machine leg, which is a real value. An actual velocity is a real velocity of a swinging machine leg, which is a real value. The forward dynamic model may be configured to indicate a relationship between an acceleration of the robot in the operation space and a velocity and an acceleration of the robot in a joint space of the robot.

Exemplarily, the first acceleration may be represented as follows:

$$\ddot{x}^{d}_{t,\,swing} = \ddot{x}^{r}_{t,\,swing} + k_{p,\,swing}\,(x^{r}_{t,\,swing} - x^{a}_{t,\,swing}) + k_{d,\,swing}\,(\dot{x}^{r}_{t,\,swing} - \dot{x}^{a}_{t,\,swing})$$

$x^{r}_{t,\,swing}$, $\dot{x}^{r}_{t,\,swing}$, and $\ddot{x}^{r}_{t,\,swing}$ are respectively a reference position, a reference velocity, and a reference acceleration of the swinging robotic leg in the operation space at a control time t, $x^{a}_{t,\,swing}$ and $\dot{x}^{a}_{t,\,swing}$ are respectively an actual position and an actual velocity of the swinging robotic leg in the operation space at the control time t, and $k_{p}$, swing and kd, swing respectively correspond to a proportional coefficient and a differential coefficient of the swinging robotic leg.

In some examples, the robotic legs in the first robotic leg group move synchronously, and the robotic legs in the second robotic leg group move synchronously, in other words, the swinging robotic legs in the swinging robotic leg group move synchronously. If the robot has no displacement in the y-axis direction, after the y-axis direction is ignored, swinging reference movement trajectories of all of the swinging robotic legs in the swinging robotic leg group are the same. The first acceleration corresponding to the swinging robotic leg group may be obtained through calculation of a first acceleration of any swinging robotic leg. In this way, a calculation amount of the first acceleration can be reduced, thereby improving the robot control efficiency.

Operation 601b: Obtain a second acceleration of the stance robotic leg group in the operation space based on a stance reference movement trajectory corresponding to the stance robotic leg group, the stance reference movement trajectory being obtained through movement trajectory planning for the stance robotic leg group based on the support plane.

The stance reference movement trajectory is a reference movement trajectory of a stance robotic leg in the stance robotic leg group, for example, a reference movement trajectory of a foot on the stance robotic leg. The second acceleration includes a desired acceleration at each control time of the stance robotic leg.

In all embodiments of the present disclosure, in each stepping period, the reference position of the stance robotic leg on the support plane is a fixed value, and during stance of the stance robotic leg group, no relative slide occurs between the foots of the stance robotic leg group and the support plane. Therefore, a value of the second acceleration is constantly zero.

Exemplarily, the second acceleration may be represented as follows:

$$\ddot{x}^{d}_{t,\,stance} = 0_{N_{c} \times 1}$$

$N_{c}$ is a quantity of stance robotic legs (a foot of each stance robotic leg in the stance robotic leg group is in contact with the support plane, and $N_{c}$ may alternatively be denoted as a quantity of stance contact points).

Operation 601c: Obtain a third acceleration of a center of mass of the robot in the operation space based on a center-of-mass reference movement trajectory corresponding to the center of mass, the center-of-mass reference movement trajectory being obtained through movement trajectory planning for the center of mass based on the support plane.

The center-of-mass reference movement trajectory is a reference movement trajectory of the center of mass of the robot. The third acceleration includes a reference position of the center of mass of the robot at each control time.

In all embodiments of the present disclosure, during movement of the robot, not only the center of mass of the robot needs to continuously move in the forward-moving direction, but also the robot needs to keep dynamic balance. Therefore, a balance controller needs to be constructed to calculate a desired acceleration of the center of mass in the forward-moving direction.

For example, the center-of-mass reference movement trajectory may be divided into a reference movement sub-trajectory in the forward-moving direction and a reference movement sub-trajectory in the vertical direction, and then a first sub-acceleration in the forward-moving direction is determined based on the reference movement sub-trajectory in the forward-moving direction, and a second sub-acceleration in the vertical direction is determined based on the reference movement sub-trajectory in the vertical direction. The process may include the following content:

1. A first sub-acceleration of the center of mass in the first direction is obtained based on a reference movement sub-trajectory of the center-of-mass reference movement trajectory in the first direction.

The first direction may be the forward-moving direction of the robot, for example, the x-axis direction of the world coordinate system.

In all embodiments of the present disclosure, the robot may be converted into an inverted pendulum model, to construct the balance controller.

Exemplarily, because the robot always moves in the first direction (for example, generates no displacement in the y-axis direction of the world coordinate system), the robotic legs in the stance robotic leg group move synchronously, the robotic legs in the swinging robotic leg group move synchronously, and the hip joints of the robot are coaxial, the robot may be simplified into a plane model in a sagittal plane (for example, a sagittal plane in FIG. 2).

Referring to FIG. 8, when a gravity field of the robot is uniform, a mass of the robot concentrates at a center of mass 802 of the robot. A center of a connection line between foots of two stance robotic legs is set as a virtual stance contact point 801 between the inverted pendulum model of the robot and the support plane, and the center of mass 802 and the virtual stance contact point 801 may be connected to convert a plane model of the robot into an inverted pendulum model 800 of the robot.

After the inverted pendulum model of the robot is constructed, the balance controller may be constructed based on the inverted pendulum model, and then the first sub-acceleration in the first direction is calculated based on the balance controller. The process may be as follows:

1). An inverted pendulum dynamic equation of the robot is constructed by using a position of the center of mass, a velocity of the center of mass, a distance between the center of mass and a stance contact point in the first direction, and a derivative of the distance as state variables and using an acceleration of the center of mass relative to the stance contact point in the first direction as a control variable, the stance contact point being a contact point between the foot corresponding to the stance robotic leg group and the support plane.

In the inverted pendulum model, the stance contact point is represented by using a virtual stance contact point. Exemplarily, the inverted pendulum dynamic equation of the robot may be expressed as follows:

$$\frac{d}{dt}\begin{bmatrix} \triangle x \\ \triangle \dot{x} \\ x_{com} \\ \dot{x}_{com} \end{bmatrix} = \begin{bmatrix} 0 & 1 & 0 & 0 \\ 0 & 0 & 0 & 0 \\ 0 & 0 & 0 & 1 \\ g/z_{com} & 0 & 0 & 0 \end{bmatrix} \begin{bmatrix} \triangle x \\ \triangle \dot{x} \\ x_{com} \\ \dot{x}_{com} \end{bmatrix} + \begin{bmatrix} 0 \\ 1 \\ 0 \\ 0 \end{bmatrix} \triangle \ddot{x}$$

$\triangle x$ and $\triangle \dot{x}$ are respectively a distance between the center of mass and the stance contact point in the first direction and a derivative of the distance, $x_{com}$ and $\dot{x}_{com}$ are respectively the position and the velocity of the center of mass in the first direction, $\triangle \ddot{x}$ is the acceleration of the center of mass relative to the virtual stance contact point in the first direction, $z_{com}$ is a position of the center of mass in the second direction, and g is a gravitational acceleration.

2). A feedback gain matrix of the inverted pendulum dynamic equation is calculated through a linear quadratic regulator (LQR).

The LQR is constructed based on quadratic programming, an essence of which is to find a multi-dimensional vector under a linear constraint condition and minimize (maximize) a quadratic objective function of the multi-dimensional vector. A quadratic programming is a specialized mathematical optimization problem where the objective function is quadratic, and the constraints are linear. Think of it as an extension of Linear Programming (LP). In an LP, the objective function is linear. In a QP, the objective function is quadratic, which makes the problem more complex but also much more powerful for modeling real-world scenarios.

Exemplarily, the objective function of the inverted pendulum dynamic equation is constructed through the LQR, and then a feedback gain matrix of the inverted pendulum dynamic equation is obtained through iteration with minimizing the objective function as an objective.

3). For each control time, a reference position and a reference velocity of the center of mass and a reference distance and a reference velocity between the center of mass and the stance contact point in the first direction at the respective control time are obtained based on the reference movement sub-trajectory in the first direction.

In all embodiments of the present disclosure, the reference movement sub-trajectory of the center of mass in the first direction may be obtained through planning based on the reference position of the stance robotic leg through a planning method such as a heuristic method (i.e., a trajectory is provided based on experience and a real environment) or an inverted pendulum model (a trajectory is planned through the inverted pendulum model). This is not limited in all embodiments of the present disclosure.

For example, the reference position of the center of mass in the first direction at the respective control time may be directly obtained based on the reference movement sub-trajectory in the first direction, and then a first-order derivation is performed on the reference position of the center of mass in the first direction at the respective control time to obtain the reference velocity of the center of mass in the first direction at the respective control time.

A reference position and a reference velocity of the stance contact point in the first direction at the respective control time may be obtained based on the stance reference movement trajectory, then geometric average is performed on the reference position of the stance contact point in the first direction at the respective control time, to obtain the reference position of the virtual stance contact point, and geometric average is performed on the reference velocity of the stance contact point in the first direction at the respective control time, to obtain the reference velocity of the virtual stance contact point, and then a subtraction is performed on the reference position of the virtual stance contact point in the first direction at the respective control time and the reference position of the center of mass in the first direction at the respective control time, to obtain the reference distance between the center of mass and the virtual stance contact point, and a subtraction is performed on the reference velocity of the virtual stance contact point in the first direction at the respective control time and the reference velocity of the center of mass in the first direction at the respective control time, to obtain the reference velocity between the center of mass and the virtual stance contact point.

4). A first sub-acceleration in the first direction at the respective control time is obtained based on the feedback gain matrix, the reference position and the reference velocity of the center of mass and the reference distance in the first direction at the respective control time, and the reference velocity between the center of mass and the stance contact point.

In all embodiments of the present disclosure, the reference position and the reference velocity of the center of mass, and the reference distance and the reference velocity between the center of mass and the stance contact point in the first direction at the respective control time are used as reference values of the control variable, to obtain the control variable of the inverted pendulum dynamic equation through the LQR based on the reference values of the control variable. The process may be expressed as follows:

$$\triangle \ddot{x} = K \left( \begin{bmatrix} \triangle x^r \\ \triangle \dot{x}^r \\ x^r_{com} \\ \dot{x}^r_{com} \end{bmatrix} - \begin{bmatrix} \triangle x^a \\ \triangle \dot{x}^a \\ x^a_{com} \\ \dot{x}^a_{com} \end{bmatrix} \right),$$

$$\begin{bmatrix} \triangle x^a \\ \triangle \dot{x}^a \\ x^a_{com} \\ \dot{x}^a_{com} \end{bmatrix} \quad \text{being an actual value of a state variable.}$$

The control variable $\triangle \ddot{x}$ of the inverted pendulum dynamic equation is the first sub-acceleration in the first direction, which is denoted as $\ddot{x}^d_{t, com}$. The first sub-acceleration in the first direction obtained in this way can not only ensure following of the center-of-mass reference movement trajectory in the first direction, but also keep dynamic balance of the robot during the movement, thereby improving robot movement stability.

In all embodiments of the present disclosure, the first sub-acceleration in the first direction may alternatively be calculated through the PD feedback controller based on the reference position, the reference velocity, and the reference acceleration of the center of mass in the first direction at the respective control time, and the actual position and the actual velocity of the center of mass in the first direction at the respective control time. This is not limited in all embodiments of the present disclosure.

2. A second sub-acceleration of the center of mass in a second direction is obtained based on a reference movement sub-trajectory of the center-of-mass reference movement trajectory in the second direction, the second direction being perpendicular to the first direction.

In all embodiments of the present disclosure, the second direction may be a vertical direction, for example, the z-axis direction of the world coordinate system.

In all embodiments of the present disclosure, a height between the center of mass of the robot and a foot of the stance robotic leg of the robot is set to a constant value. The constant value may be a distance between the center of mass of the robot and a center of the foot corresponding to the stance robotic leg (for example, a wheel center) in the z-axis direction. Therefore, the reference movement sub-trajectory of the center of mass in the second direction may be planned based on the stance reference movement trajectory and the constant value. For example, the reference movement sub-trajectory of the center of mass in the second direction is obtained through interpolation by using a spline interpolation method based on a sum of a reference position in the stance reference movement trajectory and the constant value.

In all embodiments of the present disclosure, the reference movement sub-trajectory in the second direction may be equivalent to a reference movement trajectory of the body of the robot in the second direction. By following the reference movement sub-trajectory in the second direction, the body can move in the vertical direction, to adjust the position of the center of mass. Particularly, in a staircase climbing scenario, by following the reference movement sub-trajectory in the second direction, the robot can climb up a staircase in the vertical direction.

For example, when the robot stops moving after a plurality of control times, a process of obtaining the third acceleration in the second direction may be as follows:

1. For each control time, a reference position, a reference velocity, and a reference acceleration of the center of mass in the second direction at the respective control time are obtained based on the reference movement sub-trajectory in the second direction.

In all embodiments of the present disclosure, the reference position of the center of mass in the second direction at the respective control time may be directly determined based on the reference movement sub-trajectory in the second direction, and then a first-order derivation and a second-order derivation are respectively performed on the reference position of the center of mass in the second direction at the respective control time, to obtain the reference velocity and the reference acceleration of the center of mass in the second direction at the respective control time.

2. The second sub-acceleration in the second direction at the respective control time is calculated through the PD feedback controller based on the reference position, the reference velocity, and the reference acceleration of the center of mass in the second direction at the respective control time, and an actual position and an actual velocity of the center of mass in the second direction at the respective control time.

In all embodiments of the present disclosure, based on the IMU on the body, an acceleration, an angular velocity, and a posture (i.e., an actual Euler angle) of the body may be measured, and then an actual position, an actual velocity, an actual posture, and an actual angular velocity of the body in the world coordinate system may be obtained through a state estimation algorithm in combination with actual angles and actual accelerations of all joints of the robot, and contact information between the robot and the support plane. Finally, the actual position and the actual velocity of the body in the world coordinate system are directly determined as an actual position and an actual velocity of the center of mass in the world coordinate system, to obtain the actual position and the actual velocity of the center of mass in the second direction.

Exemplarily, the second sub-acceleration in the second direction may be represented as follows:

$$\ddot{x}^{d}_{t,\,base} = \ddot{x}^{r}_{t,\,base} + k_{p,\,base}\,(x^{r}_{t,\,base} - x^{a}_{t,\,base}) + k_{d,\,base}\,(\dot{x}^{r}_{t,\,base} - \dot{x}^{a}_{t,\,base}).$$

$x^{r}_{t,\,base}$, $\dot{x}^{r}_{t,\,base}$, and $\ddot{x}^{r}_{t,\,base}$ are respectively a reference position, a reference velocity, and a reference acceleration of the center of mass in the second direction at the control time t, $x^{a}_{t,\,base}$ and $\dot{x}^{a}_{t,\,base}$ are respectively an actual position and an actual velocity of the center of mass in the second direction at the control time t, and $k_{p,\,base}$ and $k_{d,\,base}$ respectively correspond to a proportional coefficient and a differential coefficient of the center of mass.

3. The third acceleration is obtained based on the first sub-acceleration of the center of mass in the first direction and the second sub-acceleration of the center of mass in the second direction.

In all embodiments of the present disclosure, during the determining of the third acceleration, the first sub-acceleration and second sub-acceleration of the center of mass respectively corresponding to the first direction and the second direction are taken into comprehensive consideration, which improves accuracy of the determined third acceleration.

For each control time, to obtain the third acceleration may be obtained through combination of the first sub-acceleration of the center of mass in the first direction and the second sub-acceleration of the center of mass in the second direction.

Operation 601d: Obtain a fourth acceleration of a body of the robot in the operation space based on a posture reference change trajectory of the body, the posture reference change trajectory being obtained through change trajectory planning for the body.

The posture reference change trajectory is a reference change trajectory of a posture of the body of the robot, and may be configured for describing a posture change of the body of the robot. For example, the posture reference change trajectory may include a reference posture of the body of the robot at each control time. In all embodiments of the present disclosure, the posture of the body may be represented by using a Euler angle, for example, a Euler angle formed by a roll, a pitch, and a yaw of the body. In this case, the posture reference change trajectory may be a Euler angle reference movement trajectory corresponding to the body of the robot. The Euler angle reference movement trajectory includes a reference posture angle (i.e., a reference Euler angle) at each control time.

The fourth acceleration includes a desired acceleration of the body of the robot at each control time. When the posture of the body is represented by using a Euler angle, the acceleration may be a desired posture angular acceleration (that is, a desired Euler angular acceleration).

In all embodiments of the present disclosure, when the robot stops moving after a plurality of control times, a process of obtaining the fourth acceleration may be as follows:

1. For each control time, a reference posture angle, a reference posture angular velocity, and a reference posture angular acceleration of the body at the respective control time are obtained based on the posture reference change trajectory.

In all embodiments of the present disclosure, the body of the robot keeps vertical during movement of the robot, and a value of a reference posture angle, and a value of the reference posture angle, a value of the reference posture angular velocity, and a value of the reference posture angular acceleration corresponding to the body are all zero. For example, the value of the reference posture angle, the value of the reference posture angular velocity, and the value of the reference posture angular acceleration may be respectively represented as:

$$x^r_{t,\,euler} = 0_{3\times 1},\ \dot{x}^r_{t,\,euler} = 0_{3\times 1},\ \text{and}\ \ddot{x}^r_{t,\,euler} = 0_{3\times 1}.$$

2. The fourth acceleration at the respective control time is calculated through the PD feedback controller based on the reference posture angle, the reference posture angular velocity, and the reference posture angular acceleration of the body at the respective control time, and an actual posture angle and an actual posture angular velocity of the body at the respective control time.

In all embodiments of the present disclosure, based on the IMU on the body, an acceleration, an angular velocity, and a posture (i.e., an actual Euler angle) of the body may be measured, and then an actual position, an actual velocity, an actual posture, and an actual angular velocity of the body in the world coordinate system may be obtained through a state estimation algorithm in combination with actual angles and actual accelerations of all joints of the robot, and contact information between the robot and the support plane. Finally, the actual posture angle (i.e., an actual Euler angle) and the actual posture angular velocity (i.e., an actual Euler angular velocity) of the body may be obtained based on the actual state of the body in the world coordinate system.

Exemplarily, the fourth acceleration may be represented as follows:

$$\ddot{x}^d_{t,\,euler} = \ddot{x}^r_{t,\,euler} + k_{p,\,euler}\left(x^r_{t,\,euler} - x^a_{t,\,euler}\right) + k_{d,\,euler}\left(\dot{x}^r_{t,\,euler} - \dot{x}^a_{t,\,euler}\right).$$

$x^a_{t,\,euler}$ and $\dot{x}^a_{t,\,euler}$ are respectively an actual posture angle and an actual posture angular velocity of the body in the operation space at the control time t, and $k_{p,\,euler}$ and $k_{d,\,euler}$ respectively correspond to a proportional coefficient and a differential coefficient of the posture of the body.

Operation 601e: Obtain the pre-defined operation task based on the first acceleration, the second acceleration, the third acceleration, and the fourth acceleration.

In all embodiments of the present disclosure, the pre-defined operation task is obtained through the first acceleration, the second acceleration, the third acceleration, and the fourth acceleration, which improves accuracy of the obtained pre-defined operation task.

In all embodiments of the present disclosure, the pre-defined operation task may be expressed as follows:

$$\ddot{x}^d_t = \begin{bmatrix} \ddot{x}^d_{t,\,stance} \\ \ddot{x}^d_{t,\,base} \\ \ddot{x}^d_{t,\,euler} \\ \ddot{x}^d_{t,\,swing} \\ \ddot{x}^d_{t,\,com} \end{bmatrix}.$$

Operation 602: Obtain a joint torque set corresponding to the pre-defined operation task based on the pre-defined operation task and a dynamic model of the robot, the joint torque set comprising at least one joint torque configured for controlling at least one part of the robot.

In all embodiments of the present disclosure, the foregoing pre-defined operation task may be configured for task-oriented whole body control of the robot. To be specific, the robot is controlled to complete one or more set tasks by invoking all degrees of freedom of the robot in consideration of dynamic information such as masses and inertias of all links of the robot.

For example, based on rigid-body dynamic of the robot, a whole-body dynamic model of the robot in a joint space system may be expressed as follows:

$$H\ddot{q} + C = S^T \tau + J_c^T f$$

$H \in \mathbb{R}^{N_G \times N_G}$ represents a joint space inertial matrix of the robot, $C \in \mathbb{R}^{N_G}$ represents a joint space offset force vector of the robot, i.e., a sum of a Coriolis force, a centrifugal force, and a gravity corresponding to the robot, $S \in \mathbb{R}^{N_J \times N_G}$ represents a selection matrix of the robot, $J_c \in \mathbb{R}^{N_c \times N_G}$ represents a Jacobian matrix of the contact point between the robot and the support plane, $\tau \in \mathbb{R}^{N_J}$ represents an active joint torque vector of the robot, $f \in \mathbb{R}^{N_c}$ represents a contact force vector of the robot, $q, \dot{q}, \ddot{q} \in \mathbb{R}^{N_G}$ represent a generalized position vector, a generalized velocity vector, and a generalized acceleration vector at each degree of freedom of the robot, $N_G$ represents a total degree of freedom of the robot, i.e., a sum of a floating base degree of freedom $N_F$ and an active joint degree of freedom $N_J$, and $N_C$ represents a quantity of contact forces corresponding to the robot, i.e., a product of quantity $n_C$ of contact points and a dimension $N_D \in \{0, 1, 2, 3\}$ of a single contact force.

Taking the quadruped wheeled-legged robot in FIG. 2 as an example, links of the quadruped wheeled-legged robot may include four robotic legs, four wheels, a waist in a body (which is separately used as a link root), and a body, upper limbs, and a head in the body (which are a single piece). Active joints of the quadruped wheeled-legged robot may include two hip joints, linear stretching/retraction joints respectively corresponding to the four robotic legs, rotation joints of the four wheels, and one pitch rotation joint (pitch and sideway swing). In all embodiments of the present disclosure, active joint degrees of freedom of the robot are degrees of freedom respectively corresponding to the 11 active joints.

The floating base degree of freedom includes six degrees of freedom, i.e. positions px-py-pz and postures yaw-roll-pitch of a floating base coordinate system of the robot in the world coordinate system. The floating base coordinate system is constructed by using the hip joint rotation center as an origin, and coordinate axis directions of the floating base coordinate system in an initial state are the same as those of the world coordinate system. The quantity of contact points may be a quantity of robotic legs configured for stance. For example, during swinging of the swinging robotic leg group, the quantity of contact points is two.

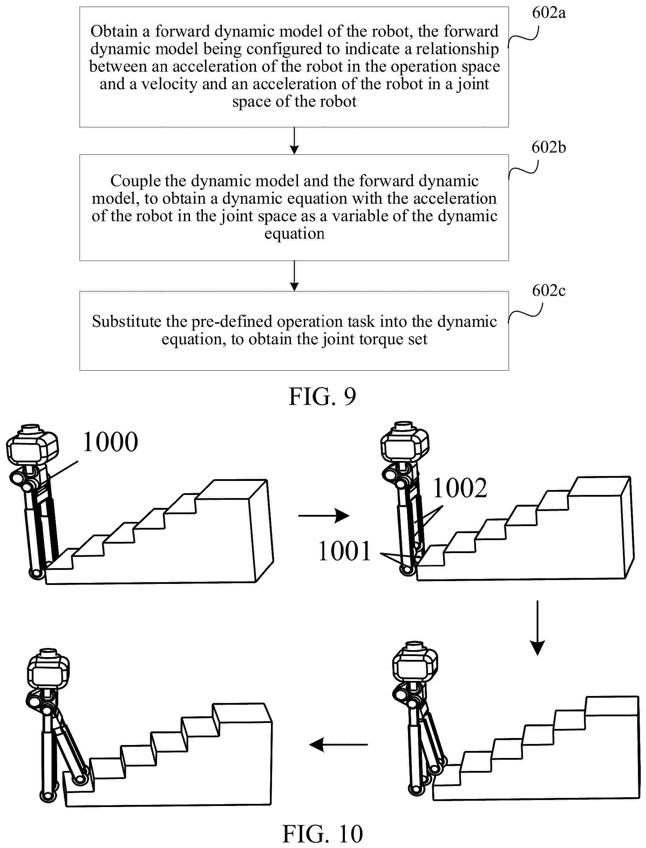

In all embodiments of the present disclosure, referring to FIG. 9, operation 602 may further include the following sub-operations:

Operation 602a: Obtain a forward dynamic model of the robot, the forward dynamic model being configured to indicate a relationship between an acceleration of the robot in the operation space and a velocity and an acceleration of the robot in a joint space of the robot.

In all embodiments of the present disclosure, it may be learned from rigid body dynamic that, the forward dynamic model of the robot may be expressed as follows:

$$\ddot{x}_t = \dot{J}_t \dot{q} + J_t \ddot{q}$$

$\ddot{x}_t$ represents an acceleration of the robot in the operation space at the control time t, $\dot{q}$ and $\ddot{q}$ respectively represent the velocity and the acceleration of the robot in joint space, i.e., a generalized position vector and a generalized velocity vector at each degree of freedom of the robot, and $J_t$ and $\dot{J}_t$ represent a Jacobian matrix corresponding to the operation space and a first derivative of the Jacobian matrix.

Operation 602b: Couple the dynamic model and the forward dynamic model, to obtain a dynamic equation with the acceleration of the robot in the joint space as a variable of the dynamic equation.

The whole-body dynamic model and the forward dynamic model are combined and then simplified to obtain:

$$\begin{bmatrix} H & -S^T & -J_c^T \\ J_t & 0_{N_\tau \times N_J} & 0_{N_\tau \times N_c} \end{bmatrix} \begin{bmatrix} \ddot{q} \\ \tau \\ f \end{bmatrix} = \begin{bmatrix} -C \\ \ddot{x}_t - \dot{J}_t \dot{q} \end{bmatrix},$$

$\begin{bmatrix} \ddot{q} \\ \tau \\ f \end{bmatrix}$ being a variable, and others being known variables.

Operation 602c: Substitute the pre-defined operation task into the dynamic equation, to obtain the joint torque set.

In all embodiments of the present disclosure, the movement of the robot is further physically limited by a body structure of the robot and a driving motor. To improve rationality and accuracy of the joint torque set, in this application, a constraint is further set during obtaining of the joint torque set. Therefore, operation 602c may further include the following content:

1. The acceleration of the robot in the dynamic equation is replaced with the pre-defined operation task, to obtain an intermediate dynamic equation.

In all embodiments of the present disclosure, the foregoing $\ddot{x}_t^d$ may be used to replace the acceleration $\ddot{x}_t$ of the robot in the operation space in the dynamic equation, to obtain the intermediate dynamic equation.

2. A physical joint constraint expression and a friction constraint expression of the robot are constructed, the physical joint constraint expression being configured for constraining each joint of the robot, and a contact force between the robot under a constraint of the friction constraint expression and the support plane satisfying a friction cone constraint.

In all embodiments of the present disclosure, an active joint torque $\tau$ in the variable is limited by an actual physical property of the driving motor of the robot. In other words, the physical joint constraint expression may be $\tau_{lb} \leq \tau \leq \tau_{ub}$. $\tau_{lb}$ and $\tau_{ub}$ respectively represent a minimum value and a maximum value of a moment of the driving motor.

In all embodiments of the present disclosure, the contact force corresponding to the foot of the robotic leg of the robot needs to satisfy the friction cone constraint. To reduce nonlinearity, a friction cone may be approximated as a friction pyramid. In this case, the friction constraint expression may be:

$$\begin{bmatrix} -\mu_i n_z^T \pm n_x^T \\ -\mu_i n_z^T \pm n_y^T \\ -n_z^T \\ n_z^T \end{bmatrix} f_i \leq \begin{bmatrix} 0 \\ 0 \\ -f_{z,\,lb} \\ f_{z,\,ub} \end{bmatrix}.$$

$n_x$, $n_y$, and $n_z$ respectively represent unit orthogonal bases along a contact surface in the world coordinate system, $\mu_i$ represents a friction coefficient corresponding to an $i^{th}$ contact force, $f_i$ represents the $i^{th}$ contact force, and $f_{z,\,lb}$ and $f_{z,\,ub}$ respectively represent a minimum value and a maximum value of a non-negative positive pressure perpendicular to the contact surface.

3. The intermediate dynamic equation is solved under constraints of the physical joint constraint expression and the friction constraint expression of the robot, to obtain the joint torque set.

In all embodiments of the present disclosure, the intermediate dynamic equation may be rewritten into $AX = B$,

$$A = \begin{bmatrix} H & -S^T & -J_c^T \\ J_t & 0_{N_\tau \times N_J} & 0_{N_\tau \times N_c} \end{bmatrix}, \quad X = \begin{bmatrix} \ddot{q} \\ \tau \\ f \end{bmatrix},$$

and

$$B = \begin{bmatrix} -C \\ \ddot{x}_t^d - \dot{J}_t \dot{q} \end{bmatrix}.$$

The solving process of AX = B is actually solving a linear equation system. Therefore, quadratic programming may be used herein to construct an objective function of the intermediate dynamic equation.

In all embodiments of the present disclosure, the objective function of the intermediate dynamic equation may be expressed as follows:

$$J = \min \, (AX - B)^T Q(AX - B) + X^T RX.$$

Q and R represent weight matrices.

The joint torque set is obtained under an optimization objective of minimizing the objective function and under the constraints of the physical joint constraint expression and the friction constraint expression of the robot. For example, a variable X may be obtained through a secondary programming optimizer under the optimization objective of minimizing the objective function and under the constraints of the physical joint constraint expression and the friction constraint expression of the robot, and an active joint torque $\tau$ in the variable X may be directly determined as the joint torque set. The method refines a method for determining the joint torque set, and improves efficiency of obtaining the joint torque set.

Taking the quadruped wheeled-legged robot in FIG. 2 as an example, the joint torque set may include joint torques respectively corresponding to the two hip joints, the linear stretching/retraction joints respectively corresponding to the four robotic legs, the rotation joints of the four wheels, and the one pitch rotation joint (pitch and sideway swing).

In all embodiments of the present disclosure, if a model structure of a robot is relatively simple, a dynamic equation of the robot is also relatively simple. In this case, the intermediate dynamic equation may be solved directly in a matrix inversion, i.e., $X = A^{-1}B$, so as to obtain the joint torque set.

Operation 603: Control, based on the joint torque set, the robot to move under guidance of the pre-defined operation task.

The joint torque set includes joint torques of all active joints of the robot at all control times. At any control time, only a driving motor corresponding to each active joint needs to be driven based on the joint torque of each active joint at the respective control time, to implement following of the pre-defined operation task. To be specific, the robot may move under guidance of the pre-defined operation task, and follow each reference movement trajectory corresponding to the pre-defined operation task, to implement control of the robot.

In conclusion, in the technical solutions provided in all embodiments of the present disclosure, for a robot having a first robotic leg group and a second robotic leg group, because rotation centers of hip joints corresponding to the robot are located in a same vertical plane, a pre-defined operation task may be planned, so that the robot quickly moves in a dynamic balance state (that is, a center of gravity of the robot may exceed a stance area of the robot) by causing one robotic leg group to perform stance and the other robotic leg group to swing. In addition, controlling the first robotic leg group and the second robotic leg group to swing alternately to control the robot to move can further improve the robot movement efficiency.

The center of gravity of the robot is a gravity concentration point of the robot, and the center of mass of the robot is a weighted average of a particle position with respect to a mass of the robot. If a gravity is equalized, the center of mass and the center of gravity may overlap. The stance area of the robot is an area defined by contact points between a foot on each robotic leg of the robot and the support plane. In the related art, a projection of a center of gravity needs to be controlled to be always in a stance area, resulting in a very small center-of-mass velocity of the robot and slow movement of the entire robot. However, in all embodiments of the present disclosure, the center of gravity of the robot may exceed the stance area of the robot, which achieves very quick movement, thereby improving the robot movement efficiency.

In addition, an accurate desired joint torque set corresponding to the pre-defined operation task can be obtained through the whole-body dynamic model of the robot based on the pre-defined operation task, so that the pre-defined operation task can be accurately implemented based on the desired joint torque set, thereby improving control accuracy of the quadruped wheeled-legged robot.

In addition, the intermediate dynamic equation is solved under the constraints of the physical joint constraint expression and the friction constraint expression of the robot, to obtain a proper and accurate desired joint torque set, thereby further improving the robot control accuracy.

In addition, the first sub-acceleration of the center of mass in the forward-moving direction is calculated through the inverted pendulum model, so that not only the center of mass of the robot can continuously move in the forward-moving direction, but also the robot can keep dynamic balance, thereby enabling the robot to move stably and rapidly, and further improving robot control stability and robot movement efficiency. Moreover, the third acceleration of the center of mass in the second direction is calculated through the PD feedback controller, and the fourth acceleration is calculated through the PD feedback controller, so that the robot is more stably controlled through the finally determined acceleration.

In all embodiments of the present disclosure, referring to FIG. 10 to FIG. 12, the technical solution provided in all embodiments of the present disclosure is described by using an example in which a quadruped wheeled-legged robot climbs a staircase. The technical solution may include the following content:

If a quadruped wheeled-legged robot 1000 climbs up a step in each stepping period, a reference position (including coordinates in the x-axis direction and the z-axis direction) of the quadruped wheeled-legged robot 1000 on each step may be planned based on size information of each step and a radius of a wheel. Then, a stance movement reference trajectory of a stance robotic leg group, a swinging movement reference trajectory of a swinging robotic leg group, and a center-of-mass reference movement trajectory of the robot are planned based on the reference positions. Because the quadruped wheeled-legged robot 1000 keeps vertical in the movement process, a posture change reference trajectory of the quadruped wheeled-legged robot 1000 may be planned.

The quadruped wheeled-legged robot 1000 adopts the technical solution provided in the foregoing embodiment. The first acceleration of the swinging robotic leg group at each control time is obtained based on the swinging reference movement trajectory, the second acceleration of the stance robotic leg group at each control time is obtained based on the stance reference movement trajectory, the third acceleration of the center of mass at each control time is obtained based on the center-of-mass reference movement trajectory, the fourth acceleration of the body at each control time is obtained based on the posture reference change trajectory, and the pre-defined operation task of the quadruped wheeled-legged robot 1000 is obtained based on the first acceleration, the second acceleration, the third acceleration, and the fourth acceleration at each control time.

The quadruped wheeled-legged robot 1000 further adopts the technical solution provided in the foregoing embodiment. The desired joint torque set corresponding to the pre-defined operation task is obtained, the desired joint torque set including desired joint torques of two hip joints, desired joint torques of linear stretching/retraction joints respectively corresponding to four robotic legs, desired joint torques of rotation joints of four wheels, and a desired joint torque of one pitch rotation joint at each control time.

The quadruped wheeled-legged robot 1000 controls the quadruped wheeled-legged robot 1000 to climb a staircase based on the desired joint torque set. Specific content may be as follows:

An initial state in which the quadruped wheeled-legged robot 1000 climbs the staircase is an overlapped standing state, which means that the four robotic legs of the quadruped wheeled-legged robot 1000 in the initial state are synchronously closed together in a forward-moving direction (for example, a horizontal rightward direction). The initial state of the quadruped wheeled-legged robot 1000 is not limited in all embodiments of the present disclosure. For example, the initial state of the robot may be a four-feet stance state or a dual-feet stance state. This is not limited in all embodiments of the present disclosure.

1. In a first stepping period (refer to FIG. 10), the quadruped wheeled-legged robot 1000 swings an inner robotic leg group 1002 (i.e., a second robotic leg group) in the forward-moving direction by using an outer robotic leg group 1001 (i.e., a first robotic leg group) as a support, so that the quadruped wheeled-legged robot 1000 climbs up a first step of a staircase.

For two inner robotic legs in the inner robotic leg group 1002, inner hip joints corresponding to the two inner robotic legs (which are referred to as inner hip joints for short below) are controlled to rotate based on desired joint torques of the hip joints, so that the two inner robotic legs swing synchronously in the forward-moving direction, inner linear stretching/retraction joints corresponding to the two inner robotic legs (which are referred to as inner linear stretching/retraction joints for short below) are controlled to stretch/contract based on desired joint torques of the linear stretching/retraction joints, and leg lengths of the two inner robotic legs are synchronously reduced, so that the two inner robotic legs are both higher than the first step and do not contact the first step.

Then, the inner hip joints are further controlled to rotate through the desired joint torques of the inner hip joints, so that the two inner robotic legs further swing synchronously in the forward-moving direction, and the inner linear stretching/retraction joints are controlled to stretch through the desired joint torques of the inner linear stretching/retraction joints, and the leg lengths of the two inner robotic legs are synchronously increased, so that the inner robotic leg group 1002 reaches a reference position on the first step.

In the process, the quadruped wheeled-legged robot 1000 controls two outer robotic legs in the outer robotic leg group 1001 to adaptively and synchronously stretch through desired joint torques of outer linear stretching/retraction joints, and causes the two outer robotic legs to perform stance through desired joint torques of outer hip joints. The quadruped wheeled-legged robot 1000 controls a body to keep vertical through a desired joint torque of the pitch rotation joint.

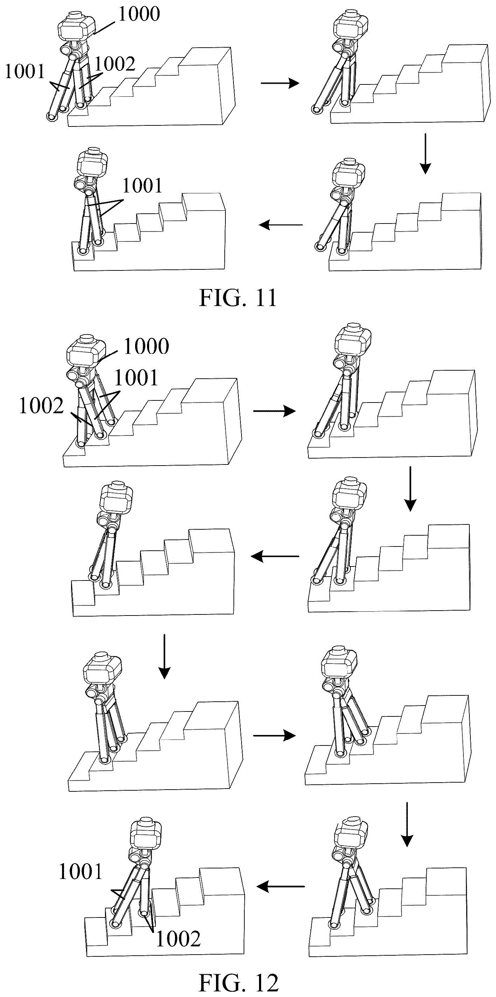

2. In a second stepping period (refer to FIG. 11), the quadruped wheeled-legged robot 1000 swings the outer robotic leg group 1001 in the forward-moving direction by using the inner robotic leg group 1002 as a support, so that the quadruped wheeled-legged robot 1000 climbs up a second step of the staircase.

For the two outer robotic legs in the outer robotic leg group 1001, the outer hip joints are controlled to rotate through the desired joint torques of the outer hip joints, so that the two outer robotic legs swing synchronously in the forward-moving direction, the outer linear stretching/retraction joints are controlled to contract through the desired joint torques of the outer linear stretching/retraction joints, and leg lengths of the two outer robotic legs are controlled to synchronously decrease, so that the two outer robotic legs are both higher than the first step and do not contact the first step.

Then the outer hip joints are controlled to further rotate through the desired joint torques of the outer hip joints, so that the two outer robotic legs further swing synchronously in the forward-moving direction, the outer linear stretching/retraction joints are further controlled to contract through the desired joint torques of the outer linear stretching/retraction joints, and the leg lengths of the two outer robotic legs are controlled to synchronously decrease, so that the two outer robotic legs are both higher than the second step and do not contact the second step.

Finally, the outer hip joints are further controlled to rotate through the desired joint torques of the outer hip joints, so that the two outer robotic legs further swing synchronously in the forward-moving direction, and the outer linear stretching/retraction joints are controlled to stretch through the desired joint torques of the outer linear stretching/retraction joints, and the leg lengths of the two outer robotic legs are synchronously increased, so that the outer robotic leg group 1001 reaches a reference position on the second step.

In the process, the quadruped wheeled-legged robot 1000 controls the two inner robotic legs in the inner robotic leg group 1002 to adaptively and synchronously stretch through the desired joint torques of the inner linear stretching/retraction joints, and causes the two inner robotic legs to perform stance through the desired joint torques of the inner hip joints. The quadruped wheeled-legged robot 1000 controls the body to keep vertical through the desired joint torque of the pitch rotation joint. The body of the quadruped wheeled-legged robot 1000 vertically moves in the forward-moving directions as the two inner robotic legs are stretched, to adjust a center of mass of the quadruped wheeled-legged robot 1000.

3. In a third stepping period (refer to FIG. 12), the quadruped wheeled-legged robot 1000 swings the inner robotic leg group 1002 in the forward-moving direction by using the outer robotic leg group 1001 as a support, so that the quadruped wheeled-legged robot 1000 climbs up a third step of the staircase.

For the two inner robotic legs in the inner robotic leg group 1002, the inner hip joints are controlled to rotate through the desired joint torques of the inner hip joints, so that the two inner robotic legs swing synchronously in the forward-moving direction, the inner linear stretching/retraction joints are controlled to contract through the desired joint torques of the inner linear stretching/retraction joints, and the leg lengths of the two inner robotic legs are controlled to synchronously decrease, so that the two inner robotic legs are both higher than the second step and do not contact the second step.

Then the inner hip joints are controlled to further rotate through the desired joint torques of the inner hip joints, so that the two inner robotic legs further swing synchronously in the forward-moving direction, the inner linear stretching/retraction joints are further controlled to contract through the desired joint torques of the inner linear stretching/retraction joints, and the leg lengths of the two inner robotic legs are controlled to synchronously decrease, so that the two inner robotic legs are both higher than the third step and do not contact the third step.

Finally, the inner hip joints are further controlled to rotate through the desired joint torques of the inner hip joints, so that the two inner robotic legs further swing synchronously in the forward-moving direction, and the inner linear stretching/retraction joints are controlled to stretch through the desired joint torques of the inner linear stretching/retraction joints, and the leg lengths of the two inner robotic legs are synchronously increased, so that the inner robotic leg group 1002 reaches a reference position on the third step.

In the process, the quadruped wheeled-legged robot 1000 controls two outer robotic legs in the outer robotic leg group 1001 to adaptively and synchronously stretch through desired joint torques of the outer linear stretching/retraction joints, and causes the two outer robotic legs to perform stance through the desired joint torques of the outer hip joints. The quadruped wheeled-legged robot 1000 controls the body to keep vertical through the desired joint torque of the pitch rotation joint. The body of the quadruped wheeled-legged robot 1000 vertically moves in the forward-moving directions as the two outer robotic legs are stretched, to adjust the center of mass of the quadruped wheeled-legged robot 1000.

In subsequent stepping periods, the inner robotic leg group 1002 and the outer robotic leg group 1001 swing interactively, so that the quadruped wheeled-legged robot 1000 climbs up the staircase.

In conclusion, in the technical solution provided in all embodiments of the present disclosure, for the quadruped wheeled-legged robot having the inner robotic leg group and the outer robotic leg group, because centers of rotation of the hip joints corresponding to the inner robotic leg group and the outer robotic leg group are located on a same vertical plane, one robotic leg group may be caused to stand, and the other robotic leg group may be caused to swing, so that the robot quickly climb the staircase in a dynamic balanced state (to be specific, a center of gravity of the robot may exceed a stance area of the robot), thereby improving the robot movement efficiency. In addition, controlling the inner robotic leg group and the outer robotic leg group to swing alternately to control the robot to climb the staircase can further improve staircase climbing efficiency of the robot.

In addition, an accurate desired joint torque set corresponding to the pre-defined operation task can be obtained through the whole-body dynamic model of the robot based on the pre-defined operation task, so that the pre-defined operation task can be accurately implemented based on the desired joint torque set, thereby improving robot control accuracy.

An apparatus embodiment of this application is described below, which may be configured for performing the method embodiment of this application. For details not disclosed in the apparatus embodiment of this application, refer to the method embodiment of this application.

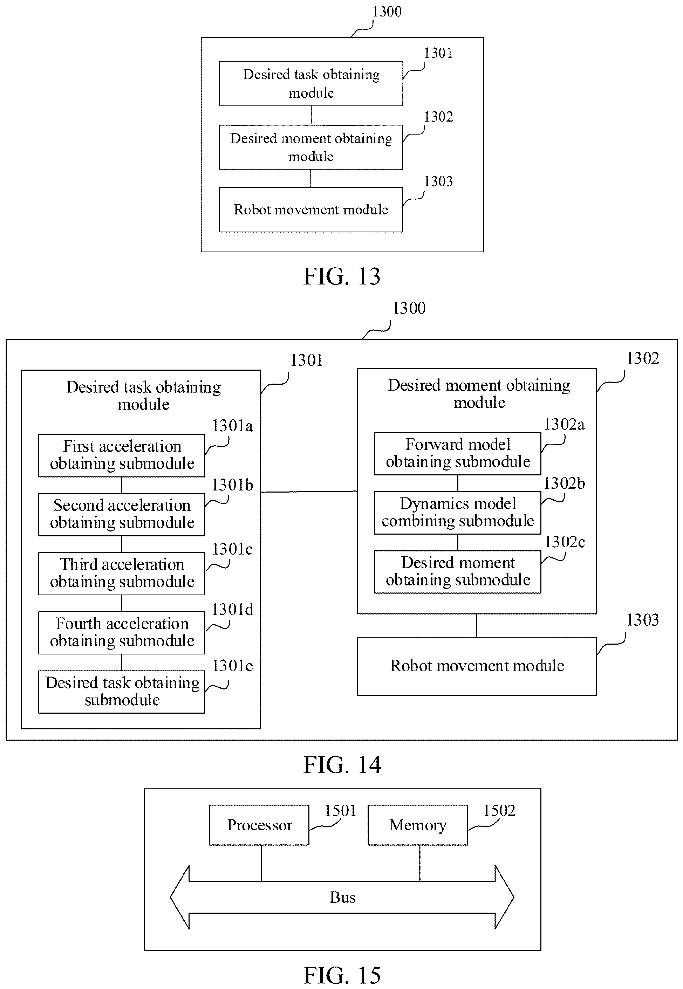

FIG. 13 is a block diagram of a control apparatus for a robot according to an embodiment of this application. The apparatus has a function of implementing the foregoing control method for a robot. The function may be implemented by hardware, or may be implemented by hardware executing corresponding software. The apparatus may be the computer device described above (for example, the wheeled-legged robot), or may be arranged in the computer device. As shown in FIG. 13, the apparatus 1300 includes a desired task obtaining module 1301, a desired moment obtaining module 1302, and a robot movement module 1303.

The desired task obtaining module 1301 is configured to a pre-defined operation task of the robot on a support plane in an operation space, the pre-defined operation task indicating a pre-set acceleration for each of at least one part of the robot , wherein the pre-defined operation task is configured to guide the robot to move on the support plane by alternately swinging the first robotic leg group and the second robotic leg group.

The desired moment obtaining module 1302 is configured to obtain a joint torque set corresponding to the pre-defined operation task based on the pre-defined operation task and a dynamic model of the robot, the joint torque set comprising at least one joint torque configured for controlling at least one part of the robot.

The robot movement module 1303 is configured to control, based on the joint torque set, the robot to move under guidance of the pre-defined operation task.

In all embodiments of the present disclosure, as shown in FIG. 14, the desired moment obtaining module 1302 includes a forward model obtaining submodule 1302a, a dynamic model combining submodule 1302b, and a desired moment obtaining submodule 1302c.

The forward model obtaining submodule 1302a is configured to obtain a forward dynamic model of the robot, the forward dynamic model being configured to indicate a relationship between an acceleration of the robot in the operation space and a velocity and an acceleration of the robot in a joint space of the robot.

The dynamic model combining submodule 1302b is configured to couple the dynamic model and the forward dynamic model, to obtain a dynamic equation with the acceleration of the robot in the joint space as a variable of the dynamic equation.

The desired moment obtaining submodule 1302c is configured to substitute the pre-defined operation task into the dynamic equation, to obtain the joint torque set.

In all embodiments of the present disclosure, the desired moment obtaining submodule 1302c is configured to:

replace the acceleration of the robot in the dynamic equation with the pre-defined operation task, to obtain an intermediate dynamic equation;

construct a physical joint constraint expression and a friction constraint expression of the robot, the physical joint constraint expression being configured for constraining each joint of the robot, and a contact force between the robot under a constraint of the friction constraint expression and the support plane satisfying a friction cone constraint; and

solve the intermediate dynamic equation under constraints of the physical joint constraint expression and the friction constraint expression of the robot, to obtain the joint torque set.

In all embodiments of the present disclosure, the desired moment obtaining submodule 1302c is further configured to:

construct an objective function of the intermediate dynamic equation through quadratic programming; and

obtain the joint torque set under an optimization objective of minimizing the objective function and under the constraints of the physical joint constraint expression and the friction constraint expression of the robot.

In all embodiments of the present disclosure, during movement of the robot, a robotic leg group configured to swing is a swinging robotic leg group, and a robotic leg group configured to stance is a stance robotic leg group. As shown in FIG. 14, the desired task obtaining module 1301 includes a first acceleration obtaining submodule 1301a, a second acceleration obtaining submodule 1301b, a third acceleration obtaining submodule 1301c, a fourth acceleration obtaining submodule 1301d, and a desired task obtaining submodule 1301e.

The first acceleration obtaining submodule 1301a is configured to obtain a first acceleration of the swinging robotic leg group in the operation space based on a swinging reference movement trajectory corresponding to the swinging robotic leg group, the swinging reference movement trajectory being obtained through movement trajectory planning for the swinging robotic leg group based on the support plane.

The second acceleration obtaining submodule 1301b is configured to obtain a second acceleration of the stance robotic leg group in the operation space based on a stance reference movement trajectory corresponding to the stance robotic leg group, the stance reference movement trajectory being obtained through movement trajectory planning for the stance robotic leg group based on the support plane.

The third acceleration obtaining submodule 1301c is configured to obtain a third acceleration of a center of mass of the robot in the operation space based on a center-of-mass reference movement trajectory corresponding to the center of mass, the center-of-mass reference movement trajectory being obtained through movement trajectory planning for the center of mass based on the support plane.

The fourth acceleration obtaining submodule 1301d is configured to obtain a fourth acceleration of a body of the robot in the operation space based on a posture reference change trajectory of the body, the posture reference change trajectory being obtained through change trajectory planning for the body.

The desired task obtaining submodule 1301e is configured to obtain the pre-defined operation task based on the first acceleration, the second acceleration, the third acceleration, and the fourth acceleration.

In all embodiments of the present disclosure, the robot stops moving after a plurality of control times. The first acceleration obtaining submodule 1301a is configured to:

obtain, for each control time, a reference position, a reference velocity, and a reference acceleration of the swinging robotic leg group at the respective control time based on the swinging reference movement trajectory; and

calculate the first acceleration at the respective control time through a PD feedback controller based on the reference position, the reference velocity, and the reference acceleration of the swinging robotic leg group at the respective control time, and an actual position and an actual velocity of the swinging robotic leg group at the respective control time.

In all embodiments of the present disclosure, during stance of a stance robotic leg, no relative slide occurs between a foot of the stance robotic leg and the support plane, and a value of the second acceleration is constantly zero.

In all embodiments of the present disclosure, the robot moves in a first direction. The third acceleration obtaining submodule 1301c is configured to:

obtain a first sub-acceleration of the center of mass in the first direction based on a reference movement sub-trajectory of the center-of-mass reference movement trajectory in the first direction;

obtain a second sub-acceleration of the center of mass in a second direction based on a reference movement sub-trajectory of the center-of-mass reference movement trajectory in the second direction, the second direction being perpendicular to the first direction; and

obtain the third acceleration based on the first sub-acceleration of the center of mass in the first direction and the second sub-acceleration of the center of mass in the second direction.

In all embodiments of the present disclosure, the robot stops moving after a plurality of control times. The third acceleration obtaining submodule 1301c is further configured to:

construct an inverted pendulum dynamic equation of the robot by using a position of the center of mass, a velocity of the center of mass, a distance between the center of mass and a stance contact point in the first direction, and a derivative of the distance as state variables and using an acceleration of the center of mass relative to the stance contact point in the first direction as a control variable, the stance contact point being a contact point between the foot corresponding to the stance robotic leg group and the support plane;

calculate a feedback gain matrix of the inverted pendulum dynamic equation through an LQR;

obtain, for each control time, a reference position and a reference velocity of the center of mass and a reference distance and a reference velocity between the center of mass and the stance contact point in the first direction at the respective control time based on the reference movement sub-trajectory in the first direction; and

obtain a first sub-acceleration in the first direction at the respective control time based on the feedback gain matrix, and the reference position and the reference velocity of the center of mass and the reference distance and the reference velocity between the center of mass and the stance contact point in the first direction at the respective control time.

In all embodiments of the present disclosure, the robot stops moving after a plurality of control times. The third acceleration obtaining submodule 1301c is further configured to:

obtain, for each control time, a reference position, a reference velocity, and a reference acceleration of the center of mass in the second direction at the respective control time based on the reference movement sub-trajectory in the second direction; and

calculate the second sub-acceleration in the second direction at the respective control time through the PD feedback controller based on the reference position, the reference velocity, and the reference acceleration of the center of mass in the second direction at the respective control time, and an actual position and an actual velocity of the center of mass in the second direction at the respective control time.

In all embodiments of the present disclosure, the robot stops moving after a plurality of control times. The fourth acceleration obtaining submodule 1301d is configured to:

obtain, for each control time, a reference posture angle, a reference posture angular velocity, and a reference posture angular acceleration of the body at the respective control time based on the posture reference change trajectory; and

calculate the fourth acceleration at the respective control time through the PD feedback controller based on the reference posture angle, the reference posture angular velocity, and the reference posture angular acceleration of the body at the respective control time, and an actual posture angle and an actual posture angular velocity of the body at the respective control time.

In all embodiments of the present disclosure, the body of the robot keeps vertical during movement of the robot, and a value of a reference posture angle, and a value of the reference posture angle, a value of the reference posture angular velocity, and a value of the reference posture angular acceleration corresponding to the body are all zero.

In all embodiments of the present disclosure, the hip joints of the robot are coaxial.

In all embodiments of the present disclosure, robotic legs in the first robotic leg group move synchronously, and robotic legs in the second robotic leg group move synchronously.

In conclusion, in the technical solutions provided in all embodiments of the present disclosure, for a robot having a first robotic leg group and a second robotic leg group, because rotation centers of hip joints corresponding to the robot are located in a same vertical plane, a pre-defined operation task may be planned, so that the robot quickly moves in a dynamic balance state (that is, a center of gravity of the robot may exceed a stance area of the robot) by causing one robotic leg group to perform stance and the other robotic leg group to swing. In addition, controlling the first robotic leg group and the second robotic leg group to swing alternately to control the robot to move can further improve the robot movement efficiency.

In addition, an accurate desired joint torque set corresponding to the pre-defined operation task can be obtained through the whole-body dynamic model of the robot based on the pre-defined operation task, so that the pre-defined operation task can be accurately implemented based on the desired joint torque set, thereby improving robot control accuracy.

When the apparatus provided in the foregoing embodiment implements the functions of the apparatus, only division of the foregoing functional modules is used as an example for description. In a practical application, the functions may be completed by different functional modules as required. To be specific, an internal structure of a device is divided into different functional modules to complete all or part of the functions described above. In addition, the apparatus provided in the foregoing embodiment belongs to the same idea as the method embodiment. For details of the specific implementation process thereof, refer to the method embodiment. Details are not described herein again.

FIG. 15 is a simplified structural block diagram of a computer device according to an embodiment of this application. The computer device may be any electronic device having data computing, processing, and storage capabilities.

As shown in FIG. 15, the computer device may include a processor 1501 and a memory 1502. The processor 1501 may include but is not limited to a central processing unit (CPU), a graphics processing unit (GPU), and a field programmable gate array (FPGA). The memory 1502 may include a random access memory (RAM) and a read-only memory (ROM). The processor 1501 and the memory 1502 may be connected through a system bus.

In all embodiments of the present disclosure, the memory 1502 has a computer program stored therein, the computer program being loaded and executed by the processor 1501 to implement the foregoing control method for a robot.

In all embodiments of the present disclosure, a computer-readable storage medium is further provided, the storage medium having a computer program stored therein, the computer program, when executed by the computer device, implementing the foregoing control method for a robot.

In all embodiments of the present disclosure, the computer-readable storage medium may include a ROM, a RAM, a solid state drive (SSD), an optical disc, or the like. The RAM may include a resistance random access memory (ReRAM) and a dynamic random access memory (DRAM).

In all embodiments of the present disclosure, a computer program product is further provided, the computer program product including a computer program, the computer program being stored in a computer-readable storage medium. The processor of the computer device reads the computer program from the computer-readable storage medium, and the processor executes the computer program, so that the computer device performs the foregoing control method for a robot.

In all embodiments of the present disclosure, a prompt interface or a pop-up window may be displayed or voice prompt information may be outputted before and during collection of relevant data of a user. The prompt interface, the pop-up window, or the voice prompt information is configured for prompting the user that the relevant data is currently being collected, so that in this application, the relevant operation of obtaining the relevant data of the user is started only after a confirmation operation performed by the user on the prompt interface or the pop-up window is obtained. Otherwise (i.e., when the confirmation operation performed by the user on the prompt interface or the pop-up window is not obtained), the relevant operation of obtaining the relevant data of the user is ended, i.e., the relevant data of the user is not obtained. In other words, all user data collected in this application is processed in strict accordance with requirements of relevant national laws and regulations, and informed consent or individual consent of a subject of personal information is collected with consent and authorization of the user. Within the scope of authorization of laws and regulations and the subject of personal information, subsequent use and processing behaviors of data are carried out, and the collection, use, and processing of relevant user data need to comply with the relevant laws, regulations, and standards of relevant countries and regions. For example, all real environments and the like involved in this application are obtained under full authorization.

"Plurality of" mentioned in the specification means two or more. The term "and/or" is an association relationship for describing associated objects and represents that three relationships may exist. For example, A and/or B may represent the following three cases: only A exists, both A and B exist, and only B exists. The character "/" generally indicates an "or" relationship between a preceding associated object and a succeeding associated object. In addition, the operation numbers described in this specification merely exemplarily show a possible execution sequence of the operations. In some other embodiments, the foregoing operations may not be performed based on the number sequence. For example, two operations with different numbers may be performed simultaneously, or two operations with different numbers may be performed based on a sequence contrary to the sequence shown in the figure. This is not limited in all embodiments of the present disclosure.

The foregoing descriptions are merely exemplary embodiments of this application, and are not intended to limit this application. Any modification, equivalent replacement, or improvement made within the principle of this application falls within the protection scope of this application.

**Claims**

1. A control method for a robot, executable by a computer device, parts of the robot comprising a body, and a first robotic leg group connected to the body through a first hip joint and a second robotic leg group connected to the body through a second hip joint, and the method comprising:

    obtaining a pre-defined operation task of the robot on a support plane in an operation space, the pre-defined operation task indicating a pre-set acceleration for each of at least one part of the robot , wherein the pre-defined operation task is configured to guide the robot to move on the support plane by alternately swinging the first robotic leg group and the second robotic leg group;
    obtaining a joint torque set corresponding to the pre-defined operation task based on the pre-defined operation task and a dynamic model of the robot, the joint torque set comprising at least one joint torque configured for controlling at least one part of the robot; and
    controlling, based on the joint torque set, the robot to move under guidance of the pre-defined operation task.

2. The method according to claim 1, wherein the obtaining a joint torque set corresponding to the pre-defined operation task based on the pre-defined operation task and a dynamic model of the robot comprises:

    obtaining a forward dynamic model of the robot, the forward dynamic model being configured to indicate a relationship between an acceleration of the robot in the operation space and a velocity and an acceleration of the robot in a joint space of the robot;
    coupling the dynamic model and the forward dynamic model, to obtain a dynamic equation with the acceleration of the robot in the joint space as a variable of the dynamic equation; and
    substituting the pre-defined operation task into the dynamic equation, to obtain the joint torque set.

3. The method according to claim 2, wherein the substituting the pre-defined operation task into the dynamic equation, to obtain the joint torque set comprises:

    replacing the acceleration of the robot in the dynamic equation with the pre-defined operation task, to obtain an intermediate dynamic equation;
    constructing a physical joint constraint expression and a friction constraint expression of the robot, the physical joint constraint expression being configured for constraining each joint of the robot, and a contact force between the robot under a constraint of the friction constraint expression and the support plane satisfying a friction cone constraint; and
    solving the intermediate dynamic equation under constraints of the physical joint constraint expression and the friction constraint expression of the robot, to obtain the joint torque set.

4. The method according to claim 3, wherein the solving the intermediate dynamic equation under constraints of the physical joint constraint expression and the friction constraint expression of the robot, to obtain the joint torque set comprises:

    constructing an objective function of the intermediate dynamic equation by quadratic programming; and
    obtaining the joint torque set under an optimization objective of minimizing the objective function and under the constraints of the physical joint constraint expression and the friction constraint expression of the robot.

5. The method according to any one of claims 1 to 4, wherein when the first robotic leg group is a swinging robotic leg group, the second robotic leg group is a stance robotic leg group;
the obtaining a pre-defined operation task of the robot on a support plane comprises:

    obtaining a first acceleration of the swinging robotic leg group in the operation space based on a swinging reference movement trajectory corresponding to the swinging robotic leg group, the swinging reference movement trajectory being obtained through movement trajectory planning for the swinging robotic leg group based on the support plane;
    obtaining a second acceleration of the stance robotic leg group in the operation space based on a stance reference movement trajectory corresponding to the stance robotic leg group, the stance reference movement trajectory being obtained through movement trajectory planning for the stance robotic leg group based on the support plane;
    obtaining a third acceleration of a center of mass of the robot in the operation space based on a center-of-mass reference movement trajectory corresponding to the center of mass, the center-of-mass reference movement trajectory being obtained through movement trajectory planning for the center of mass based on the support plane;

obtaining a fourth acceleration of a body of the robot in the operation space based on a posture reference change trajectory of the body, the posture reference change trajectory being obtained through change trajectory planning for the body; and

obtaining the pre-defined operation task based on the first acceleration, the second acceleration, the third acceleration, and the fourth acceleration.

6. The method according to claim 5, wherein the robot stops moving after a plurality of control times; and the obtaining a first acceleration of the swinging robotic leg group in the operation space based on a swinging reference movement trajectory corresponding to the swinging robotic leg group comprises:

obtaining, for each control time, a reference position, a reference velocity, and a reference acceleration of the swinging robotic leg group at the respective control time based on the swinging reference movement trajectory; and

calculating the first acceleration at the respective control time through a proportional derivative (PD) feedback controller based on the reference position, the reference velocity, and the reference acceleration of the swinging robotic leg group at respective the control time, and an actual position and an actual velocity of the swinging robotic leg group at the respective control time.

7. The method according to claim 5 or 6, wherein during stance of a stance robotic leg, no relative slide occurs between foots of the stance robotic leg group and the support plane, and a value of the second acceleration is constantly zero.

8. The method according to any one of claims 5 to 7, wherein the robot moves in a first direction; and the obtaining a third acceleration of a center of mass of the robot in the operation space based on a center-of-mass reference movement trajectory corresponding to the center of mass comprises:

obtaining a first sub-acceleration of the center of mass in the first direction based on a reference movement sub-trajectory of the center-of-mass reference movement trajectory in the first direction;

obtaining a second sub-acceleration of the center of mass in a second direction based on a reference movement sub-trajectory of the center-of-mass reference movement trajectory in the second direction, the second direction being perpendicular to the first direction; and

obtaining the third acceleration based on the first sub-acceleration of the center of mass in the first direction and the second sub-acceleration of the center of mass in the second direction.

9. The method according to claim 8, wherein the robot stops moving after a plurality of control times; and the obtaining a first sub-acceleration of the center of mass in the first direction based on a reference movement sub-trajectory of the center-of-mass reference movement trajectory in the first direction comprises:

constructing an inverted pendulum dynamic equation of the robot by using a position of the center of mass, a velocity of the center of mass, a distance between the center of mass and a stance contact point in the first direction, and a derivative of the distance as state variables and using an acceleration of the center of mass relative to the stance contact point in the first direction as a control variable, the stance contact point being a contact point between the foot corresponding to the stance robotic leg group and the support plane;

calculating a feedback gain matrix of the inverted pendulum dynamic equation through a linear quadratic regulator (LQR);

obtaining, for each control time, a reference position and a reference velocity of the center of mass and a reference distance and a reference velocity between the center of mass and the stance contact point in the first direction at the respective control time based on the reference movement sub-trajectory in the first direction; and

obtaining a first sub-acceleration in the first direction at the respective control time based on the feedback gain matrix, and the reference position and the reference velocity of the center of mass and the reference distance and the reference velocity between the center of mass and the stance contact point in the first direction at the respective control time.

10. The method according to claim 8 or 9, wherein the robot stops moving after a plurality of control times; and the obtaining a second sub-acceleration of the center of mass in a second direction based on a reference movement sub-trajectory of the center-of-mass reference movement trajectory in the second direction comprises:

obtaining, for each control time, a reference position, a reference velocity, and a reference acceleration of the center of mass in the second direction at the respective control time based on the reference movement sub-trajectory in the second direction; and

calculating the second sub-acceleration in the second direction at the respective control time through the PD feedback controller based on the reference position, the reference velocity, and the reference acceleration of the center of mass in the second direction at the respective control time, and an actual position and an actual velocity of the center of mass in the second direction at the respective control time.

11. The method according to any one of claims 5 to 10, wherein the robot stops moving after a plurality of control times; and the obtaining a fourth acceleration of a body of the robot in the operation space based on a posture reference change trajectory of the body comprises:

obtaining, for each control time, a reference posture angle, a reference posture angular velocity, and a reference posture angular acceleration of the body at the respective control time based on the posture reference change trajectory; and

calculating the fourth acceleration at the respective control time through the PD feedback controller based on the reference posture angle, the reference posture angular velocity, and the reference posture angular acceleration of the body at the respective control time, and an actual posture angle and an actual posture angular velocity of the body at the respective control time.

12. The method according to claim 11, wherein the body of the robot keeps vertical during movement of the robot, and a value of a reference posture angle, and a value of the reference posture angle, a value of the reference posture angular velocity, and a value of the reference posture angular acceleration corresponding to the body are all zero.

13. The method according to any one of claims 1 to 12, wherein the first hip joint and the second hip joint of the robot are coaxial.

14. The method according to any one of claims 1 to 13, wherein robotic legs in the first robotic leg group move synchronously, and robotic legs in the second robotic leg group move synchronously.

15. A control apparatus for a robot, parts of the robot comprising a body, and a first robotic leg group connected to the body through a first hip joint and a second robotic leg group connected to the body through a second hip joint, and the apparatus comprising:

a desired task obtaining module, configured to obtain pre-defined operation task of the robot on a support plane in an operation space, the pre-defined operation task indicating a pre-set acceleration for each of at least one part of the robot , wherein the pre-defined operation task is configured to guide the robot to move on the support plane by alternately swinging the first robotic leg group and the second robotic leg group;

a desired moment obtaining module, configured to obtain a joint torque set corresponding to the pre-defined operation task based on the pre-defined operation task and a dynamic model of the robot, the joint torque set comprising at least one joint torque configured for controlling at least one part of the robot; and

a robot movement module, configured to control, based on the joint torque set, the robot to move under guidance of the pre-defined operation task.

16. A computer device, comprising a processor and a memory, the memory having a computer program stored therein, the computer program being loaded and executed by the processor to implement the control method for a robot according to any one of claims 1 to 14.

17. A computer-readable storage medium, having a computer program stored therein, the computer program being loaded and executed by a processor to implement the control method for a robot according to any one of claims 1 to 14.

18. A computer program product, comprising a computer program, the computer program being stored in a computer-readable storage medium, and a processor reading the computer program from the computer-readable storage medium and executing the computer program to implement the control method for a robot according to any one of claims 1 to 14.

FIG. 1

**200**

Sagittal plane

209

208

205

207

206

Center of rotation of a hip joint

204

202

201

203

FIG. 2

FIG. 3

FIG. 4

501

502

503

FIG. 5

---

Obtain a pre-defined operation task of the robot on a support plane in an operation space, the pre-defined operation task indicating a pre-set acceleration for each of at least one part of the robot , wherein the pre-defined operation task is configured to guide the robot to move on the support plane by alternately swinging the first robotic leg group and the second robotic leg group

601

---

Obtain a joint torque set corresponding to the pre-defined operation task based on the pre-defined operation task and a dynamic model of the robot, the joint torque set comprising at least one joint torque configured for controlling at least one part of the robot

602

---

Control, based on the joint torque set, the robot to move under guidance of the pre-defined operation task

603

FIG. 6

Obtain a first acceleration of the swinging robotic leg group in the operation space based on a swinging reference movement trajectory corresponding to the swinging robotic leg group, the swinging reference movement trajectory being obtained through movement trajectory planning for the swinging robotic leg group based on the support plane

601a

Obtain a second acceleration of the stance robotic leg group in the operation space based on a stance reference movement trajectory corresponding to the stance robotic leg group, the stance reference movement trajectory being obtained through movement trajectory planning for the stance robotic leg group based on the support plane

601b

Obtain a third acceleration of a center of mass of the robot in the operation space based on a center-of-mass reference movement trajectory corresponding to the center of mass, the center-of-mass reference movement trajectory being obtained through movement trajectory planning for the center of mass based on the support plane

601c

Obtain a fourth acceleration of a body of the robot in the operation space based on a posture reference change trajectory of the body, the posture reference change trajectory being obtained through change trajectory planning for the body

601d

Obtain the pre-defined operation task based on the first acceleration, the second acceleration, the third acceleration, and the fourth acceleration

601e

FIG. 7

FIG. 8

Obtain a forward dynamic model of the robot, the forward dynamic model being configured to indicate a relationship between an acceleration of the robot in the operation space and a velocity and an acceleration of the robot in a joint space of the robot

602a

Couple the dynamic model and the forward dynamic model, to obtain a dynamic equation with the acceleration of the robot in the joint space as a variable of the dynamic equation

602b

Substitute the pre-defined operation task into the dynamic equation, to obtain the joint torque set

602c

FIG. 9

1000

1002

1001

FIG. 10

FIG. 11

FIG. 12

1300

Desired task obtaining module — 1301

Desired moment obtaining module — 1302

Robot movement module — 1303

FIG. 13

1300

Desired task obtaining module — 1301

First acceleration obtaining submodule — 1301a

Second acceleration obtaining submodule — 1301b

Third acceleration obtaining submodule — 1301c

Fourth acceleration obtaining submodule — 1301d

Desired task obtaining submodule — 1301e

Desired moment obtaining module — 1302

Forward model obtaining submodule — 1302a

Dynamics model combining submodule — 1302b

Desired moment obtaining submodule — 1302c

Robot movement module — 1303

FIG. 14

Processor — 1501

Memory — 1502

Bus

FIG. 15

## INTERNATIONAL SEARCH REPORT

| | |
|---|---|
| International application No. | |
| | **PCT/CN2023/131610** |

**A. CLASSIFICATION OF SUBJECT MATTER**

B25J9/16(2006.01)i

According to International Patent Classification (IPC) or to both national classification and IPC

**B. FIELDS SEARCHED**

Minimum documentation searched (classification system followed by classification symbols)

IPC:B25J

Documentation searched other than minimum documentation to the extent that such documents are included in the fields searched

Electronic data base consulted during the international search (name of data base and, where practicable, search terms used)

CNTXT, ENTXTC, 万方, WANFANG, CNKI: 腿, 髋, 交替, 期望, 加速度, 力矩: VEN, ENTXT, USTXT, EPTXT, WOTXT: leg, hip, supersede, replace, in turn, alternation, desired, acceleration, torque.

**C. DOCUMENTS CONSIDERED TO BE RELEVANT**

| Category* | Citation of document, with indication, where appropriate, of the relevant passages | Relevant to claim No. |
|---|---|---|
| Y | JP 2005046950 A (ISHIKAWAJIMA-HARIMA HEAVY INDUSTRIES CO., LTD.) 24 February 2005 (2005-02-24) <br> description, paragraphs 17-28, and figures 1-7 | 1-4, 13-18 |
| Y | CN 113753150 A (TENCENT TECHNOLOGY (SHENZHEN) CO., LTD.) 07 December 2021 (2021-12-07) <br> description, paragraphs 64-127, and figures 1-9 | 1-4, 13-18 |
| Y | CN 113290559 A (UBTECH ROBOTICS CORP., LTD.) 24 August 2021 (2021-08-24) <br> description, paragraphs 65-231, and figures 1-7 | 1-4, 13-18 |
| A | CN 104108433 A (NATIONAL UNIVERSITY OF DEFENSE TECHNOLOGY) 22 October 2014 (2014-10-22) <br> entire document | 1-18 |
| A | CN 111208826 A (DEEP ROBOTICS CO., LTD.) 29 May 2020 (2020-05-29) <br> entire document | 1-18 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **15 January 2024** | **28 January 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/131610**

| Patent document cited in search report | | | Publication date (day/month/year) | Patent family member(s) | | | Publication date (day/month/year) |
|---|---|---|---|---|---|---|---|
| JP | 2005046950 | A | 24 February 2005 | None | | | |
| CN | 113753150 | A | 07 December 2021 | WO | 2022252863 | A1 | 08 December 2022 |
| | | | | US | 2023087057 | A1 | 23 March 2023 |
| | | | | EP | 4234380 | A1 | 30 August 2023 |
| CN | 113290559 | A | 24 August 2021 | CN | 113290559 | B | 11 November 2021 |
| | | | | US | 2022379470 | A1 | 01 December 2022 |
| | | | | WO | 2022247170 | A1 | 01 December 2022 |
| CN | 104108433 | A | 22 October 2014 | CN | 104108433 | B | 28 September 2016 |
| CN | 111208826 | A | 29 May 2020 | CN | 111208826 | B | 16 June 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310558206